(19)

Europäisches
Patentamt
European
Patent Office
Office européen
des brevets

(11) **EP 3 118 608 B1**

(12) **EUROPEAN PATENT SPECIFICATION**

(45) Date of publication and mention
of the grant of the patent:
**12.02.2020 Bulletin 2020/07**

(21) Application number: **15760735.9**

(22) Date of filing: **13.02.2015**

(51) Int Cl.:
*G01J 3/44* *(2006.01)*        *G01N 21/65* *(2006.01)*
*G02B 21/00* *(2006.01)*        *G01N 21/63* *(2006.01)*
*G01J 3/02* *(2006.01)*

(86) International application number:
**PCT/CN2015/073030**

(87) International publication number:
**WO 2015/135415 (17.09.2015 Gazette 2015/37)**

(54) **METHOD AND APPARATUS FOR MEASURING LIGHT-SPLITTING PUPIL LASER DIFFERENTIAL MOTION CONFOCAL BRILLOUIN-RAMAN SPECTRUMS**

VERFAHREN UND VORRICHTUNG ZUR MESSUNG KONFOKALER BRILLOUIN-RAMAN-SPEKTREN EINER LASERDIFFERENZBEWEGUNG EINER LICHTTEILENDEN PUPILLE

PROCÉDÉ ET APPAREIL DE MESURE DE SPECTRES BRILLOUIN-RAMAN CONFOCAUX DE MOUVEMENT DIFFÉRENTIEL LASER À PUPILLE DE SÉPARATION OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2014 CN 201410086360**

(43) Date of publication of application:
**18.01.2017 Bulletin 2017/03**

(73) Proprietor: **Beijing Institute Of Technology Beijing 100081 (CN)**

(72) Inventors:
• **ZHAO, Weiqian**
**Beijing 100081 (CN)**
• **SHENG, Zhong**
**Beijing 100081 (CN)**
• **QIU, Lirong**
**Beijing 100081 (CN)**

• **WANG, Yun**
**Beijing 100081 (CN)**

(74) Representative: **Kayahan, Senem et al**
**Yalciner Patent and Consulting Ltd.**
**Tunus Cad. No: 85/3-4**
**Kavaklidere Cankaya**
**06680 Ankara (TR)**

(56) References cited:
CN-A- 102 053 047        CN-A- 103 091 299
CN-A- 103 439 254        CN-A- 103 884 703
CN-U- 202 204 524        US-A- 4 986 656
US-A1- 2008 181 554

• ZHAO, WEIQIAN ET AL.: 'Laser Divided-Aperture Differential Confocal Sensing Technology with Improved Axial Resolution' OPTICS EXPRESS vol. 20, no. 23, 02 November 2012, pages 25979 - 25989, XP055309712

## Description

## FIELD OF TECHNOLOGY

The application belongs to technical field of microscopic spectrum imaging, which relates to a divided-aperture laser differential confocal Brillouin-Raman spectrum measuring method and device.

## BACKGROUND

Light refraction widely exists in interaction process between light and particles. That is, when a light beam passes medium, the medium particle is interacted by the light wave and has a transition from one quantum state to another while radiating scattered wave. Different scattering, e.g. Rayleigh scattering, anti-stokes scattering and stokes scattering are generated due to different energy level transition ways. Usually, according to changed wavelength of incident light, the light scattering is divided into three types: Rayleigh scattering, Raman scattering and Brillouin scattering. Among the three scattering types, Rayleigh scattering light is the strongest and Raman scattering light is the weakest.

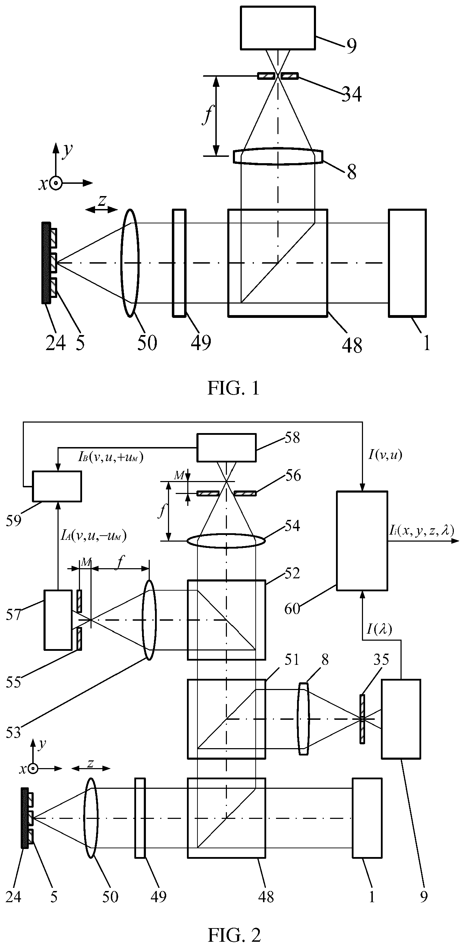

The principle of the conventional confocal Raman spectrum detecting device is shown in FIG. 1. In which, the laser beam generated from the light source system passes through a polarizing beam splitter, a quarter-wave plate and a objective lens and is focused on the measured sample to excite the Raman scattering light carrying spectral characteristic of the sample. The measured sample moved by the three-dimensional scanning system to make the Raman scattering light corresponding to different areas of the measured sample can be detected. Raman scattering light passes the quarter-wave plate again and is reflected by the polarizing beam splitter, the first lens converges the light reflected by the polarizing beam splitter and the Raman scattering spectrum which carries the spectrum information of the measured sample detected by spectrum detector behind the first pinhole. Patent document CN103439254A discloses a divided-aperture laser confocal Raman spectrum testing method and device, wehrein a confical microscopic technology and a Raman spectrum detecting technology are combined. Patent document CN102053047 A discloses a laser differential confocal theta scanning and detecting method to resolve power and measuring range.

The conventional confocal spectrum microscopic technology has disadvantages hereinbelow:

(1) Spatial resolution is inferior, which is only 1 micrometers, Raman spectrum excited by laser has very weak strength signal, which is lower than the abandoned Rayleigh scattering light beam for 6 orders. In order to detect the extreme weak Raman spectrum signal, the diameter of the pinhole of the confocal Raman spectrum detecting system is usually 100 micrometers more or less, means the pinhole of Raman spectrometer is much larger than the pinhole of traditional confocal microscopy which is near 10 micrometers, as a result, the spatial resolution of the conventional confocal Raman spectrometer is only 1 micrometers, and it has been no substantial improvement for twenty years since the confocal Raman spectrum detecting technology invented.

(2) The ability of capturing the Raman spectrum excited at the focus is weak. In the confocal Raman spectrum detecting system, since the intensity response at the extreme point is not sensitive, it is hard to capture the Raman spectrum information of the sample excited at the focus accurately. Therefore, the spatial resolution of the conventional confocal Raman spectrometer is limited.

(3) The detecting time is long, and system drift is large. Since the confocal Raman spectrum signal is weak, the detector used in spectrum imaging needs long time to integrate (usually as long as several hours), the drift of optical system and object stage may cause defocus of the sample, therefore the spatial resolution of the confocal Raman spectrum detecting is reduced.

(4) The stray light of the sample is strong, which affects the SNR (signal to noise ratio) of the Raman spectrum detector. The conventional confocal Raman spectrum detector uses backscatter detecting method, the incident light path and detecting light path of scattering light are co-path, therefore, there must has the deficiency from strong interference of sample stray light, and limits the spectrum detecting ability of the conventional confocal microscopy to high scattering sample.

(5) The capacity of multi-property parameters measurement needs to be improved. In the conventional spectrum detecting technology, the Raman scattering spectrum and the Brillouin scattering spectrum are detected separately, which cannot satisfy the requirement of detecting mechanical form and property parameters.

In order to overcome the disadvantage of poor focusing accuracy existing in the conventional confocal Raman spectrometer, a differential confocal Raman spectrum test method was provided which has a strong capacity of detecting Raman spectrum in micro-area. In this method, the confocal detecting light path are divided into two parts, and the point detectors in the two detecting systems are placed in front of the lens focus and behind the focus to achieve differential detection, thus realized the bipolar absolute measurement and zero-point tracking. The principle is shown in FIG. 2. This method aims to realize the spectrum detection and imaging of sample in micro-area, which provides a new technique for measuring 3D structure of micro-area and spectrum characteristic of the sample. However, the differential confocal Raman measuring method uses the structure of two confocal light paths and two physical pinholes, the differential confocal measuring system has a complex structure, and the requirement of defocusing position of pinholes is rigorous, and adjustment is difficult, the extra error sources are generated. The method does not use the Brillouin scattering spectrum which contains abundant information of sample, therefore it is limited in testing the material elasticity and piezoelectric property. In addition, due to the limitation of principle of differential confocal microscopy, the resolution, working distance and field of view are difficult to be taken into consideration simultaneously.

Usually the scattered Raman spectrum intensity of the sample is $10^{-3}$ to $10^{-6}$ times of the intensity of the reflected Rayleigh scattering light, the conventional spectrum detector abandoned the Rayleigh scattering light which is much stronger than the Raman scattering light. Therefore, in order to improve the spatial resolution of the conventional confocal Raman spectrometer, the abandoned Rayleigh scattering light in the spectrum detecting system can be used for auxiliary detection, and it is a new approach of spectrum detection and imaging with high resolution.

## SUMMARY

One of the objective of the present disclosure is to provide a divided-aperture laser differential confocal Brillouin-Raman spectrum measuring method and the device thereof. By using the abandoned Rayleigh scattering light in the traditional confocal Raman spectrum detection, a divided-aperture laser differential confocal microscopic imaging system is constructed to realize three-dimensional imaging of sample with high resolution. In addition, the feature that the "zero-crossing point" of the divided-aperture laser differential confocal microscopy accurately corresponds to the focus of objective is used to control the spectrum detector to capture the Raman spectrum information accurately excited at the focus of an objective lens, thereby high-spatial resolution detection and spectrum information of the measured sample are achieved, that is "mapping-spectrum" with high spatial resolution is realized, and effectively balancing resolution and measuring range. By detecting the abandoned Brillouin scattering spectrum in the confocal Raman spectrum detection, the basic properties of materials (such as elasticity, magnetism, phase change) and a plurality of cross effects (such as piezoelectricity, magneto-elasticity, photoelastic) are obtained, thereby realizes the measurement of multi-property parameters, including material stress, elastic parameter, density etc al. Through utilizing the advantage complementary of confocal Raman spectrum detecting technology and confocal Brillouin spectrum detecting technology, the confocal spectrum detection technical solution which detects the Raman spectrum and Brillouin spectrum at the same time is designed, the multi-property parameters of materials are measured in composite and decoupled.

Beneficial effect:

The method embodiment of the present disclosure has several advantages compared with the conventional technology as follow:

1. In the present disclosure, the divided-aperture laser differential confocal microscopy is organic combined with the spectrum detecting technology, the high accurate objective lens focus tracking and capturing capacities of the divided-aperture laser differential confocal microscopy is fused, the spectrum corresponding to the minimum area of sample as large as the spot at objective focus can be detected, which simplifies the optical structure and improves the micro-area spectrum detection capacity as well.

2. In the present disclosure, the divided-aperture laser differential confocal microscopy is organic combined with the Raman spectrum detecting technology and Brillouin spectrum detecting technology, the high accurate objective lens focus tracking and capturing capacities of the divided-aperture laser differential confocal microscopy is fused, the characteristic that the "zero-crossing point" of axial response curve of the divided-aperture differential confocal system accurately corresponds to the objective lens focus is used to track and locate the sample instantly and accurately, which overcomes the disadvantage in the conventional confocal spectrometer that has poor ability to capture the spectrum at focus of objective lens.

3. The measurement of the divided-aperture laser differential confocal microscopy has an absolute zero point, which may perform bipolar absolute measurement, and the absolute zero point locates at the maximum sensitivity point of the axial response curve and accurately corresponds to the "focus" of the measurement system, which is extremely convenient for focus tracking and measurement, and may achieve absolute measurement of geometric scale, additionally, it overcomes the system drift generated during overlong time detection.

4. Since an oblique incidence detecting optical path is adopted in the disclosure, the anti-scattering ability is preferable, which overcomes the disadvantage that the conventional confocal microscopy cannot restrain interference from the focal plane scattering light, and improves the signal-to-noise ratio of spectrum detection. In the disclosure, by reasonable designing, it is capable to simultaneously detect the Raman scattering spectrum and Brillouin scattering spectrum which contain different information of sample, and it has complementary advantages, realizes synthetic detection of material composition and basic physical property with high resolution, that is, it is convenient for comprehensive test of a plurality of property parameters.

5. The spot of the single confocal light path is divided for differential detection is used to achieve geometric scale imaging, it simplifies the optical structure of the conventional differential confocal microscopy with reserving the advantages of the laser differential confocal system and the original divided-aperture laser differential confocal system, several detecting modes can be achieved including divided-aperture laser differential confocal microscopic detection, confocal Raman spectrum detection, confocal Brillouin spectrum detection, comprehensive detection of divided-aperture laser differential confocal multi-property parameters, etc al, and the user can freely select different detection mode merely via software switch.

The method embodiment of the present disclosure has the following characteristics:

1. Single confocal light path, single detector, and spot divided and subtracted for differential detection, this method may effectively restrain the common-mode noise caused by the light source intensity variation, the electron drift of detector, difference of environment and other factors, and it simplifies the detecting optical system, eliminates the errors caused by the asymmetry of the two detectors, the non-consistency of response characteristics of the two detectors, and improves the defocus characteristic of the confocal system.

2. The divided-aperture laser differential confocal microscopy and the spectrum imaging system are fused structurally and functionally, which may realize sample tomography of micro-area geometric parameters and sample spectrum detection of micro-area, it means that the present disclosure achieves several imaging modes including micro-area tomography, mapping-spectrum tomography and spectrum detection, etc al, and it significantly improves the anti-interference ability, linearity and defocus characteristic of the imaging system.

3. It achieves effective balance between measuring range and resolution, it can be adopted to detect samples with different reflectivities by disposing the parameters of the two micro-areas obtained from the spot, the application is expanded.

4. The transverse differential confocal with dividing spot is adopted, it is convenient for changing objective lens with different NA according to different requirements, and it is convenient for adjusting.

5. By selecting proper transmission-reflection ratio of the beam splitting system in front of the divided-aperture differential confocal detecting system and the Brillouin spectrum detecting system, the light intensity can be used most effectively.

6. By introducing the tight-focus technique with the combination of radially polarized beam and the pupil filer, it achieves the multi-spectrum comprehensive test with super-resolution.

## BRIEF DESCRIPTION OF THE DRAWINGS

FIG. 1 is a schematic diagram showing the confocal Raman spectrum imaging method;
FIG. 2 is a schematic diagram showing the differential confocal Raman spectrum imaging method;
FIG. 3 is a schematic diagram showing a divided-aperture laser differential confocal Brillouin-Raman spectrum measuring method according to an embodiment of the invention;
FIG. 4 is a schematic diagram showing a D-shape divided-aperture laser differential confocal Brillouin-Raman spectrum measuring method;
FIG. 5 is a schematic diagram showing a super-resolution divided-aperture laser differential confocal Brillouin-Raman spectrum measuring method according to an embodiment of the invention;
FIG. 6 is a schematic diagram showing a divided-aperture laser differential confocal Brillouin-Raman spectrum measuring device of the invention;
FIG. 7 is a schematic diagram showing a divided-aperture laser differential confocal Brillouin-Raman spectrum measuring device with a confocal spectrum detecting system of the invention;
FIG. 8 is a schematic diagram showing a divided-aperture laser differential confocal Brillouin-Raman spectrum measuring device with a light beam modulating system of the invention;
FIG. 9 is a schematic diagram showing a divided-aperture laser differential confocal Brillouin-Raman spectrum measuring device with optical-fiber transmission of the invention;
FIG. 10 is a schematic diagram showing a divided-aperture laser differential confocal Brillouin-Raman spectrum measuring device with a detected spot amplifying system of the invention;
FIG. 11 is a schematic diagram showing an embodiment of divided-aperture laser differential confocal Brillouin-Raman spectrum measuring method and device with super-resolution of the invention;
FIG. 12 is a schematic diagram showing the axial response curves of divided-aperture laser differential confocal Brillouin-Raman spectrum measurement including divided-aperture laser differential confocal axial response curve, Raman spectrum axial response curve and Brillouin spectrum axial response curve.
FIG. 13 is a flow diagram showing the steps of the divided-aperture laser differential confocal Brillouin-Raman spectrum measuring method of the invention.

In the FIGs, list of reference number is as follows: 1-light source system, 2-objective, 3-illuminating pupil, 4-collecting pupil, 5-measured sample, 6-dichroic optical system, 7-Raman spectrum detecting system, 8-first converging lens, 9-first spectrum detector, 10-first detector, 11-beam splitting system, 12-Brillouin spectrum detecting system, 13-second converging lens, 14-second spectrum detector, 15-second detector, 16-divided-aperture laser differential confocal detecting system, 17-third converging lens, 18 image acquisition system, 19-detected area A, 20-detected area B, 21-polarization modulator, 22-first pupil filter, 23-second pupil filter, 24-three-dimensional scanning system, 25-position sensor, 26-data processing unit, 27-spot dividing and detecting module, 28-differential subtraction module, 29-data fusion module, 30-computer processing system, 31-divided-aperture laser differential confocal axial response curve, 32-Raman spectrum axial response curve, 33-Brillouin spectrum axial response curve, 34-first pinhole, 35-second pinhole, 36-light beam modulating system, 37-fourth converging lens, 38-third pinhole, 39-fifth converging lens, 40-collimating lens, 41-first optical fiber terminal, 42-first optical fiber, 43-second optical fiber terminal, 44-second optical fiber, 45-third optical fiber terminal, 46-third optical fiber, 47-image amplifying system, 48-polarizing beam splitter, 49-quarter-wave plate, 50-converging objective lens, 51-first polarization maintaining splitter, 52-second polarization maintaining splitter, 53-fifth converging lens, 54-sixth converging lens, 55-fourth pinhole, 56-fifth pinhole, 57-third detector, 58-fourth detector, 59-differential confocal data processing unit, 60-data output module

## DESCRIPTION OF THE EMBODIMENTS

Exemplary embodiments of the present disclosure will be described in detail with reference to the accompanying figures hereinafter.

First embodiment

The divided-aperture laser differential confocal Brillouin-Raman spectrum measuring method includes the steps as follows.

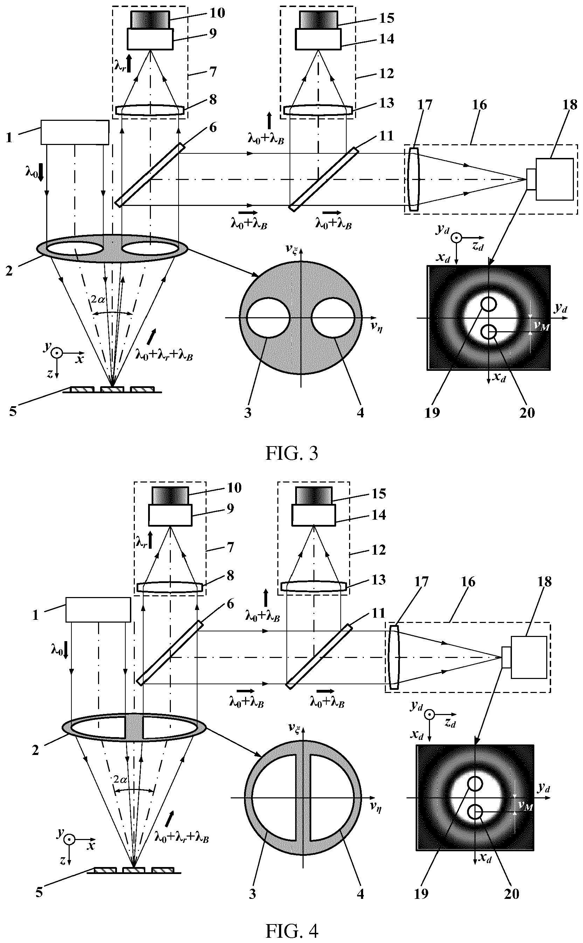

As shown in FIG. 3, firstly, placing an illuminating pupil 3 and a collecting pupil 4 at the pupil plane of a objective 2. The light source system 1 generates exciting light beam, the exciting light beam is focused by the objective 2 onto a measured sample 5 after passing through the illuminating pupil, and excites Raman scattering light and Brillouin scattering light which carry the spectrum characteristics of the measured sample 5, and Rayleigh scattering light as well, meanwhile, a part of exciting light is reflected. The Raman scattering light, the Brillouin scattering light ,the Rayleigh scattering light and the reflected light return to a dichroic optical system 6 after passing through the objective 2 and the collecting pupil 4, and the dichroic optical system 6 separates the Raman scattering light from other spectrums losslessly. The Brillouin scattering light, the Rayleigh scattering light and the reflected light are reflected by the dichroic optical system 6 and entering the beam splitting system 11, the Rayleigh scattering light and the Brillouin scattering light and the reflected light are divided into two parts by the beam splitting system 11, one part of the Brillouin scattering light, the Rayleigh scattering light and the reflected light pass through the beam splitting system 11 and enter a divided-aperture laser differential confocal detecting system 16. The divided-aperture laser differential confocal detecting system 16 uses the characteristic that a lateral deviation of the detector may lead to phase shift of the axial response characteristic curve of the divided-aperture laser differential confocal microscopy, this characteristic can be used to realize the micro-area geometric position detection of the measured sample 5. The other part of the Brillouin scattering light, the Rayleigh scattering light and the reflected light are reflected by the beam splitting system 11 and entering a Brillouin spectrum detecting system 12 to perform Brillouin spectrum detection. The Raman scattering light passes through the dichroic optical system 6 and enters the Raman spectrum detecting system 7 to perform Raman spectrum detection. The measured sample 5 may be performed by Raman enhancing technology such as enhancing Raman spectrum Nano particle, in order to enhance the intensity of the Raman scattering light.

The computer processing system 30 is used to control the three-dimensional scanning system 24 to move the measured sample 5, to make the Rayleigh scattering light, the Raman scattering light and the Brillouin scattering light in different areas of the measured sample 5 pass through the objective 2 and the collecting pupil 4.

When processing the Raman spectrum signal obtained by the Raman spectrum detecting system 7, the embodiment may perform a Raman spectrum detection; when processing the Brillouin spectrum signal obtained by the Brillouin spectrum detecting system 12, the embodiment may perform a Brillouin spectrum detection; when processing the differential signal obtained by the divided-aperture laser differential confocal detecting system 16, a tomography with high resolution may be performed. When processing the differential signal obtained by the divided-aperture laser differential confocal detecting system 16, the Raman spectrum signal obtained by the Raman spectrum detecting system 7 and the Brillouin spectrum signal obtained by the Brillouin spectrum detecting system 12 at the same time, the embodiment may perform a mapping-spectrum tomography in micro-area with high-spatial resolution, thereby achieving comprehensive test on multiple property parameters of the measured sample 5.

Specially, the circular illuminating pupil 3 and collecting pupil 4 may be replaced by other shapes (for example "D" shape, and constituting D-shape divided-aperture laser differential confocal Raman spectrum measuring method, as shown in FIG. 4).

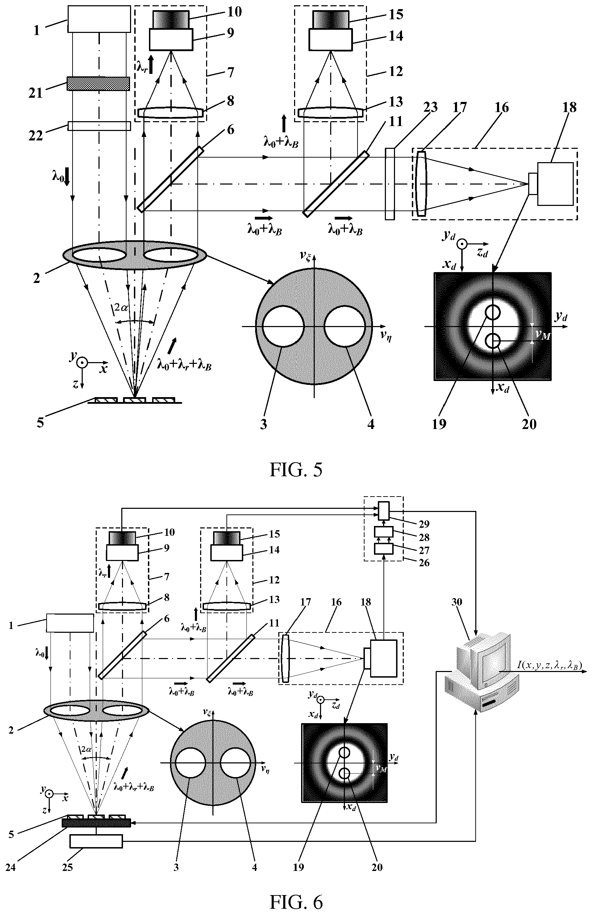

Specially, the exciting light beam may be a linear polarized beam, a circular polarized beam or other polarized beams, it may also be structured beams generated by pupil filter technology, a polarized light beam combined with pupil filter technology may compact the focus spot size of objective 2, and increase lateral resolution of the system, as shown in FIG. 5.

The divided-aperture laser differential confocal Brillouin-Raman spectrum measuring device is shown in FIG. 6. As shown in FIG. 6, it contains a light source system 1 for generating an exciting light beam, a objective 2, a dichroic optical system 6, a Raman spectrum detecting system 7, a beam splitting system 11, a Brillouin spectrum detecting system 12, a divided-aperture laser differential confocal detecting system 16, a three-dimensional scanning system 24, a position sensor 25, a data processing unit 26 and a computer processing system 30.

Wherein, a illuminating pupil 3 and a collecting pupil 4 are placed in the pupil plane of the objective 2. The illuminating pupil 3 and the objective 2 are located in the outgoing direction of the exciting light beam of the light source system 1 in sequence. The illuminating pupil 3 and the exciting light beam are co-axial, the dichroic optical system 6 is located behind the collecting pupil 4. The beam splitting system 11 is located at the reflecting direction of the dichroic optical system 6.

The Raman spectrum detecting system 7 is located at the transmission direction of the dichroic optical system 6. The Raman spectrum detecting system 7 includes a first converging lens 8, a first spectrum detector 9 and a first detector 10. The detecting surface of the first spectrum detector 9 is located at the focus of the first converging lens 8, and the first detector 10 is located behind the first spectrum detector 9.

The Brillouin spectrum detecting system 12 is located at the reflecting direction of the beam splitting system 11. The Brillouin spectrum detecting system 12 includes a second converging lens 13, a second spectrum detector 14 and a second detector 15. The detecting surface of the second spectrum detector 14 is located at the focus of the second converging lens 13. The second detector 15 is located behind the second spectrum detector 14.

The divided-aperture laser differential confocal detecting system 16 is located at the transmission direction of the beam splitting system 11. The divided-aperture laser differential confocal detecting system 16 includes a third converging lens 17 and an image acquisition system 18, the detecting surface of the image acquisition system 18 is located at the focus of the third converging lens 17.

The data processing unit 26 includes a spot dividing and detecting module 27, a differential subtraction module 28 and a data fusion module 29, wherein the spot dividing and detecting module 27 and the differential subtraction module 28 are configured to process the spot detected by the image acquisition system 18, and obtains the divided-aperture laser differential confocal axial response curve 31, and then obtains the position information of the measured sample 5. The data fusion module 29 is configured to fuse the position information, the Raman spectrum information and the Brillouin spectrum information, and realize the three-dimensional reconstruction and the spectrum information fusion of the measured sample 5. The relationships of the three ones above as follow: the spot dividing and detecting module 27 divides and detects the Airy disk collected by the image acquisition system 18, the obtained signal enters the differential subtraction module 28 to perform differential subtraction and to obtain the divided-aperture laser differential confocal axial response curve 31, and then the divided-aperture laser differential confocal axial response curve 31 enters the data fusion module 29.

The computer processing system 30 is connected to the position sensor 25, the three-dimensional scanning system 24 and the data fusion module 29. The image acquisition system 18 and the spot dividing and detecting module 27 are connected. The data fusion module 29 is connected to the first detector 10 and the second detector 15.

The computer processing system 30 is used to control the three-dimensional scanning system 24 to move the measured sample 5, to make the reflected light, Rayleigh scattering light, the Raman scattering light and the Brillouin scattering light in different area of the measured sample 5 pass through the objective 2 and the collecting pupil 4.

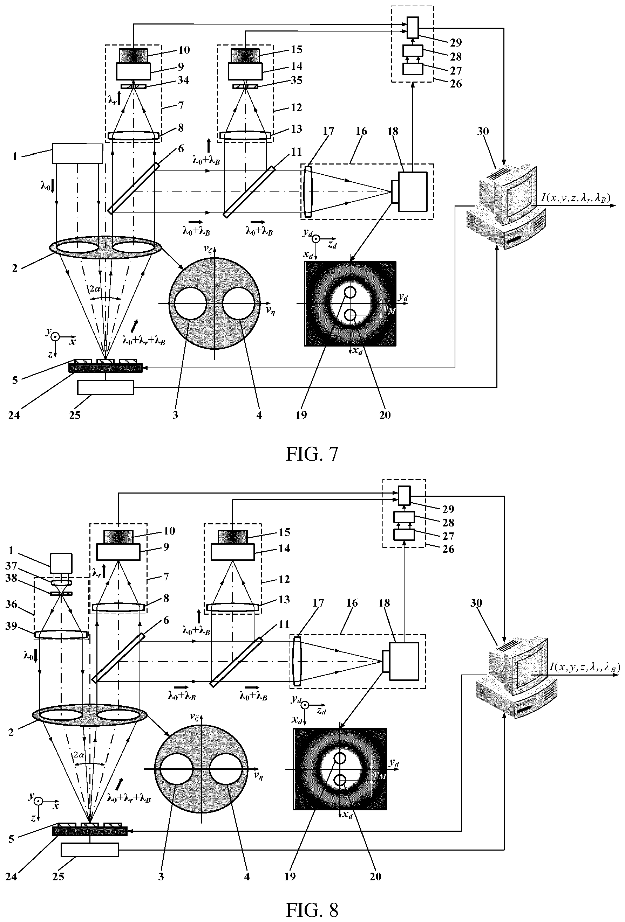

As shown in FIG. 7, by placing a first pinhole 34 and a second pinhole 35 respectively at the focus positions of the first converging lens 8 and the second converging lens 13, a divided-aperture laser differential confocal Brillouin-Raman spectrum detecting device with a confocal spectrum measuring system is constructed.

As shown in FIG. 8, a light beam modulating system 36 is disposed between the light source system 1 and the illuminating pupil 3. The light beam modulating system 36 includes a fourth converging lens 37, a third pinhole 38 located at the focus of the fourth converging lens 37 and a fifth converging lens 39 whose focus located at the third pinhole 38, thereby, a divided-aperture laser differential confocal Brillouin-Raman spectrum measuring device with a light beam modulating system is constructed.

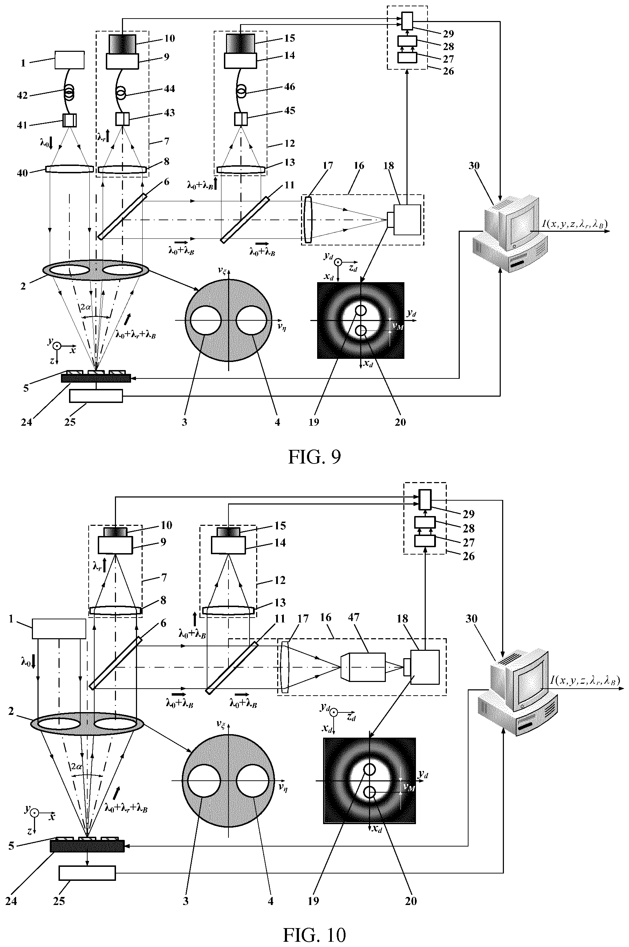

As shown in FIG. 9, it is capable to transmit exciting light and scattering spectrums via optical fiber. A collimating lens 40 which is co-axial with the illuminating pupil 3, a first optical fiber terminal 41 at the focus of the collimating lens 40, a second optical fiber terminal 43 at the focus of the first converging lens 8, a third optical fiber terminal 45 at the focus of the second converging lens 13 are included. A first optical fiber 42 is used to connect the first optical fiber terminal 41 with the light source system 1; a second optical fiber 44 is used to connect the second optical fiber terminal 43 with the first spectrum detector 9, a third optical fiber 46 is used to connect the third optical fiber terminal 45 with the second spectrum detector 14. By the structure above, modulation, flexible selecting function and ultra-scale detection and measurement can be achieved.

As shown in FIG. 10, in the divided-aperture laser differential confocal detecting system, an image amplifying system 47 is added. The image amplifying system may enlarge the Airy disk detected by the image acquisition system 18, thus increase the acquisition accuracy of the divided-aperture laser differential confocal measuring system. The third converging lens 17, the image amplifying system 47 and the image acquisition system 18 are disposed along the light path sequentially, wherein the image amplifying system 47 and the third converging lens 17 are co-focused, and the image acquisition system 18 is located at the focus plane of the image amplifying system 47.

Second embodiment

In this embodiment, the light source system 1 is a laser, the dichroic optical system 6 is a notch filter, the first spectrum detector 9 is a Raman spectrum detector, the beam splitting system 11 is a beam splitter, the second spectrum detector 14 is a Brillouin spectrum detector, the image acquisition system 18 is a charge-coupled device (CCD), the polarization modulator 21 is a radial polarized light generator, the three-dimensional scanning system 24 is a three-dimensional scanning object stage, the image amplifying system 47 is an amplifying objective.

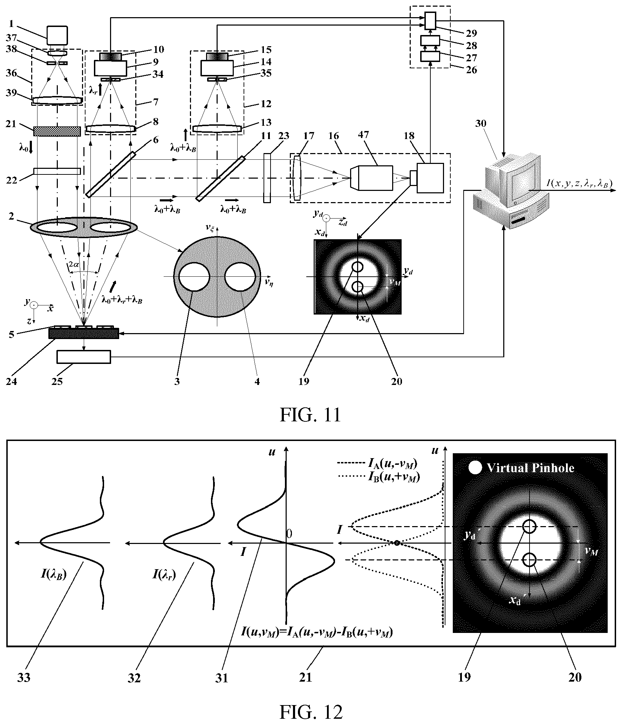

As shown in FIG. 11, a divided-aperture laser differential confocal Brillouin-Raman spectrum measuring device with super-resolution, and the testing steps are:

First of all, disposing the illuminating pupil 3 and the collecting pupil 4 on the pupil plane of the objective 2. The laser 1 excites exciting beam which can excite Raman spectrum and Brillouin spectrum of the measured sample 5, the exciting light enters the third pinhole 38 and passes through the fourth converging lens 37 and forms a point light source, and passes the fifth converging lens 39 whose focus is at the third pinhole 38, then a parallel exciting light beam is obtained after being collimated and beam expanded. The parallel light beam passes through the radial polarized light generator 21 and the first pupil filter 22 and transmits through the illuminating pupil 3, and then the parallel light beam is focused onto the measured sample 5 by the objective 2, a mixed spectrums light beam including Raman scattering light, Brillouin scattering light, Rayleigh scattering light and reflected light returns from the measured sample 5, in addition, Raman scattering light and Brillouin scattering light contain the spectrum characteristics of the measured sample 5, the Rayleigh scattering light has the same wavelength with the incident light.

Then, the computer processing system 30 is used to control the three-dimensional scanning object stage 24 to move the measured sample 5, to make the reflected light, the Rayleigh scattering light, the Raman scattering light and Brillouin scattering light in different areas of the measured sample 5 pass through the objective 2 and the collecting pupil 4. The notch filter 6 separates the Raman scattering light from the other spectrums losslessly.

The reflected light, the Rayleigh scattering light and Brillouin scattering light reflected by the notch filter 6 and enters the beam splitter 11, the Brillouin scattering light, the Rayleigh scattering light and the reflected light pass through the beam splitter 11 and enter the divided-aperture laser differential confocal detecting system 16 via the second pupil filter 23, and then converged by the third converging lens 17 and enter the image amplifying objective 47. The amplified spot is detected by CCD 18, and the detected spot enters the spot dividing and detecting module 27, detected area A 19 and detected area B 20 are two minute detected areas disposed in the detected spot in the $x_d$ axis of the detected spot, The two minute detected areas are symmetrical about $y_d$ axis and have a drift $v_M$ relative to the $y_d$ axis. It is detected that the response of the two minute detected areas are $I_A(u, -v_M)$ and $I_B(u,v_M)$, and the differential subtraction module 28 performs a differential subtraction of the response signals to obtain a divided-aperture laser differential confocal axial response curve 31.

$$I(u,v_M)=I_A(u,-v_M)-I_B(u,-v_M)$$

Wherein $I(u,v_M)$ is the divided-aperture laser differential confocal axial response, $I_A(u,-v_M)$ is the axial response of the detected area A, $I_B(u,-v_M)$ is the response of the detected area B, $u$ is the axial optical normalized coordinate, $v_M$ is the axial deviation of the two minute detected areas. The "zero-crossing point" of the divided-aperture laser differential confocal axial response curve 31 accurately corresponds to the focus of the exciting light beam, then the height information of the measured sample 5 can be obtained via the "zero-crossing point" of the divided-aperture laser differential confocal axial response curve 31 therefore, combining the position information feedback from the position sensor 25, three-dimensional profile of the measured sample 5 can be reconstructed.

The Brillouin scattering light, the Rayleigh scattering light and the reflected light are reflected by the beam splitter 11 and entering the Brillouin spectrum detecting system 12, passing through the second converging lens 13 and the second pinhole 35 which is at the focus of the second converging lens 13, entering the Brillouin spectrum detector 14 and the second detector 15 therebehind, then the Brillouin spectrum axial response curve $I(\lambda_B)$33 is obtained. The $\lambda_B$ is the wavelength of the Brillouin scattering light which is excited from the measured sample 5 with the exciting light beam.

At the same time, the Raman scattering light passes through the notch filter 6 and enters the Raman spectrum detecting system 7, it passes through the first converging lens 8 and the first pinhole 34 which is at the focus of the first converging lens 8, and enters the Raman spectrum detector 9 and the first detector 10 therebehind. The Raman spectrum axial response curve $I(\lambda_r)$ 32 which carries the Raman spectrum information of the measured sample 5 is detected. The $\lambda_r$ is the wavelength of the Raman scattering light which is excited from the measured sample 5 with the exciting light beam.

The divided-aperture laser differential confocal axial response curve 31, the Raman spectrum axial response curve 32 and the Brillouin spectrum axial response curve 33 are shown in FIG. 12.

The device in the disclosure uses the tight-focus technology of radial polarized light, when the signals of two detected areas are subtracted, the divided-aperture laser differential confocal axial response $I(u,v_M)$ is obtained, then the focus position of the exciting spot is captured accurately by the absolute zero point of the response curve, therefore, the system may realize three-dimensional tomography with super-response.

When dealing with the Raman spectrum axial response curve $I(\lambda_r)$ 31 obtained by the Raman spectrum detecting system 7 which receives the Raman scattering light, the system may perform Raman spectrum detection.

When dealing with the spectrum axial response curve $I(\lambda_B)$ 33 obtained by the Brillouin spectrum detecting system 12 which receives the Brillouin scattering light, the Rayleigh scattering light and the reflected light, the system may perform Brillouin spectrum detection.

When dealing with the divided-aperture laser differential confocal axial response curve $I(u,v_M)$ 31, the Raman spectrum axial response curve $I(\lambda_r)$ 32 and the Brillouin spectrum axial response curve $I(\lambda_B)$ 33 at the same time, the device may perform mapping-spectrum tomography in micro-area with super-resolution, that is, it may realize super-resolution multi-property parameters measurement of the measured sample 5 including the geometric position information and the multiple spectrum information.

As shown in FIG. 11, the divided-aperture laser differential confocal Brillouin-Raman spectrum measuring device with super-resolution includes a laser 1 for generating exciting laser beam, a objective 2, a illuminating pupil 3, a collecting pupil 4, a notch filter 6, a Raman spectrum detecting system 7, a beam splitter 11, a Brillouin spectrum detecting system 12, a divided-aperture laser differential confocal detecting system 16, a radial polarized light generator 21, a first pupil filter 22, a second pupil filter 23, a three-dimensional object stage 24, a position sensor 25 and a data processing unit 26. Wherein, the pupil plane of the objective 2 is disposed with the illuminating pupil 3 and the collecting pupil 4; the radial polarized light generator 21, the first pupil filter 22 and the illuminating pupil 3 are disposed in the exit direction of the light beam of the laser 1, the radial polarized light generator 21, the first pupil filter 22, the illuminating pupil 3 and the exciting light beam are co-axial, the notch filter 6 is disoposed behind the collecting pupil 4, the Raman spectrum detecting system 7 is disposed in the transmission direction of the notch filter 6, the beam splitter 11 is located in the reflection direction of the notch filter 6. The Brillouin spectrum detecting system 12 is disposed in the reflection direction of the beam splitter 11, the divided-aperture laser differential confocal detecting system 16 is disposed in the transmission direction of the beam splitter 11, the data processing unit 26 is configured to fuse and process the data acquired by the Raman spectrum detecting system 7, the Brillouin spectrum detecting system 12, the divided-aperture laser differential confocal detecting system 16 and the position sensor 25. In the Raman spectrum detecting system 7, the first pinhole 34 is placed at the focus of the first converging lens 8 to filter stray light, in order to increase the signal-noise ratio of Raman spectrum detection. In the Brillouin spectrum detecting system 12, the second pinhole 35 is placed at the focus of the second converging lens 13 to filter stray light, in order to increase the signal-noise ratio of Brillouin spectrum detection. The light beam from the laser 1 is modulated by the light beam modulating system 36 to ensure the quality of the exciting light beam, and the light beam modulating system 36 is placed behind the laser 1 and formed by a fourth converging lens 37, a third pinhole 38 and a fifth converging lens 39, the fourth converging lens 37 and the fifth converging lens 39 are co-focus, and the third pinhole 38 located at the focus of the fourth converging lens 37 and the fifth converging lens 39. The image at the focal plane of the third converging lens 17 of the divided-aperture laser differential confocal detecting system 16 enters the CCD 18 after amplified by the amplifying objective 47, to facilitate the detector in dividing and the spot, and increase the detecting accuracy.

Third embodiment

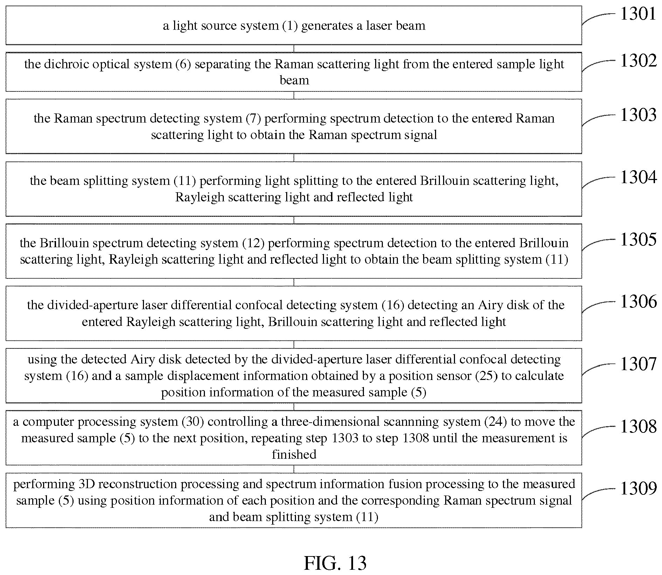

As shown in FIG. 13, it shows steps of the divided-aperture laser differential confocal Brillouin-Raman spectrum measuring method according to an embodiment of the disclosure, which may include the following steps:
Step 1301, the light source system 1 generating an exciting light beam;

In practical application, the exciting light beam may be a linear polarized beam, a circular polarized beam or other polarized beams, and it can also be structured beam generated by the pupil filter, the disclosure is not limited thereto.

The exciting light beam may be selected the wavelength correspondingly to the excited frequency shift by the measured sample 5, usually the wavelength of exciting light beam is 532 nm or 785 nm.

As shown in FIG. 5, the polarized light beam combined with the pupil filter technology may compress the focused spot size of the objective 2, the lateral resolution of the method could be increased.

In an embodiment of the disclosure, as shown in FIG. 8, a light beam modulating system 36 is disposed between the light source system1 and the illuminating pupil 3.

The light beam modulating system 36 may include a fourth converging lens 37, a third pinhole 38 located at the focus of the fourth converging lens 37, a fifth converging lens 39 whose focus is at the third pinhole 38, which are arranged along the light path in sequence. They constitute divided-aperture laser differential confocal Brillouin-Raman spectrum measuring device with a light beam modulating system.

In the embodiment of the disclosure, the exciting light beam is converged by the fourth converging lens 37 and forms a point light source, and then collimated by the fifth converging lens 39 whose focus is in the third pinhole 38 and a parallel light beam is formed. The light beam modulating system 36 performs modulation on the exciting light beam generated by the light source system 1 to ensure the quality of the exciting light beam.

In another embodiment of the disclosure, as shown in FIG. 9, it is capable to transmit exciting light beam via optical fiber. Specifically, a collimating lens 40 and a first optical fiber terminal 41 at the focus of the collimating lens 40 are disposed between the light source system 1 and the illuminating pupil 3. A first optical fiber terminal 41 accesses to the first optical fiber 42.

The exciting light beam is transmitted to the first optical fiber terminal 41 via the first optical fiber 42.

The first optical fiber terminal 41 emits the exciting light beam;
The exciting light beam is trasnmited to the illuminating pupil 3 on the pupil plane 3 of the objective 2 in parallel after being collimated by the collimating lens 40.

In practical application, it is capable to focusing the light source system 1, or converge the exciting light beam into the first optical fiber 42 via converging lens or other methods, and then transmit the exciting light beam to the first optical fiber terminal 41.

As shwon in FIG. 3, the pupil plane of the objective 2 is disposed with an illuminating pupil 3 and a collecting pupil 4. The illuminating pupil 3 and the objective 2 are located in the exit direction of the light source system 1. The illuminating pupil 3 and the exciting light beam are co-axial.

In an embodiment, the shape of circular illuminating pupil 3 and the circular collecting pupil 4 may be replaced by other shapes (such as D shape divided-aperture laser differential confocal Raman spectrum measuring method, as shown in FIG. 4).

The exciting light beam is focused onto the measured sample 5 by the objective 2 after passing the illuminating pupil 3 which is on the pupil plane of the objective 2, then the sample excited light beam is obtained. The sample excited light beam includes the Raman scattering light, the Brillouin scattering light, the Rayleigh scattering light and the reflected light.

The dichroic optical system 6 is located behind the collecting pupil 4. The sample excited light beam passes the collecting pupil 4 which is on the pupil plane of the objective 2 and reaches the dichroic optical system 6.

Furthermore, the illuminating pupil 3 on the pupil plane of the objective 2 deviates the main axis of the objective 2, and the exciting laser beam is projected obliquely onto the measured sample 5 after being converged by the objective 2, and excites the mixed spectrums beam includes the Raman scattering light and Brillouin scattering light which carry the spectrum characteristic of the measured sample 5, Rayleigh scattering light which has the same wavelength with the incident light, and the reflected light as well. The collecting pupil 4 on pupil plane of the objective 2 collects the Raman scattering light, the Brillouin scattering light, the Rayleigh scattering light and the reflected light, then the collected Raman scattering light, Brillouin scattering light, Rayleigh scattering light and the reflected light reach the dichroic optical system 6.

The light of back-reflection is existing because the measured sample 5 has certain roughness. As a result, even the measured sample 5 is located at the focus of the objective 2, substance out of the focus may also be illuminated. This may generate the stray light. The stray light forms a Gauss distribution and takes the focus as the center. Normal confocal system illuminates the measured sample 5 in a perpendicular way, and the collecting light is also perpendicular, therefore most of the stray light enters the spectrum detecting system thereby. In the embodiment of the disclosure, the illuminating light beam and the collecting light beam are oblique, therefore the collecting light path keeps away from the strongest region of the stray light.

In the embodiment of the disclosure, the measured sample 5 may be processed with Raman enhancing technology, for example enhancing the Raman spectrum Nano particles, etc al, in order to increase the intensity of the Raman scattering light.

Detailedly, it is capable to add special particle at the surface of the measured sample 5 to achieve spectrum resonance, thus achieving the effect of increasing Raman spectrum excitation.

Step 1302, the dichroic optical system 6 separating the Raman scattering light from the entering sample excited light beam;

In specific application, the dichroic optical system 6 is a notch filter, it may separate the Raman scattering light from other spectrums losslessly.

The Raman spectrum detecting system 7 is located at the transmission direction of the notch filter 6, the Raman scattering light passes through the notch filer 6 and enters the Raman spectrum detecting system 7 to perform spectrum detection.

The beam splitting system 11 is located at the reflection direction of the notch filter 6, the Brillouin scattering light, the Rayleigh scattering light and the reflected light reflected by the notch filter 6 and enter the beam splitting system 11 to perform partition.

Step 1303, the Raman spectrum detecting system 7 performing a spectrum detection on the Raman scattering light to obtain the Raman spectrum signal;

When the Raman spectrum signal obtained by the Raman spectrum detecting system 7, the embodiment of the disclosure may perform Raman spectrum detection, the detected spectrum is shown in FIG. 12, the Raman scattering spectrum axial response curve $I(\lambda_r)$32 is obtained which carries the spectrum information of the measured sample 5, the $\lambda_r$ is the wavelength of the Raman scattering light excited from the measured sample 5 with the exciting light beam.

In another embodiment of the invention, the Raman spectrum detecting system 7 includes a first converging lens 8, a first spectrum detector 9 and a first detector 10.

Step 1303 may include the following steps of:

Step S11, the first converging lens 8 converging the Raman scattering light which is separated from other spectrums by the dichroic optical system 6;

Step S12, the first spectrum detector 9 extracting Raman scattering signal from the converged Raman scattering light;

Step S13, the first detector 10 detecting a relative intensity of different wavelengths of the Raman spectrum to obtain the Raman spectrum information.

In another embodiment of the disclosure, the first spectrum detector 9 may be a Raman spectrum detector, the detecting surface may be located at the focus of the first converging lens 8.

The Raman spectrum detecting system 7 may include a first pinhole 34,

The first pinhole 34 is disposed at the focus of the first converging lens 8, the detecting surface of the first spectrum detector 9 is located behind the first pinhole 34.

The Raman scattering light is focused in the first pinhole 34.

In the embodiment of the disclosure, the step 1303 may further include the following steps:
Step S14, the first pinhole 34 filtering stray light at the position except the focus of the first converging lens 8.

When only dealing with the Raman spectrum signal obtained by the Raman spectrum detecting system 7 which receives the Raman scattering light, the embodiment of the disclosure may perform confocal Raman spectrum detection.

In another embodiment of the disclosure, as shown in FIG. 9, the Raman spectrum detecting system 7 may further include a second optical fiber terminal 43 and a second optical fiber 44, which may transmit scattering spectrum via optical fiber.

The second optical fiber terminal 43 is disposed at the focus of the first converging lens 8, the Raman scattering light is focused on the second optical fiber terminal 43, the second optical fiber terminal 43 accesses to the second optical fiber 44.

In the embodiment of the disclosure, step 1303 may further include the steps of:
Step S15, the second optical fiber terminal 43 transmitting the Raman scattering light to the first spectrum detector 9 via the second optical fiber 44.

Step 1304, the beam splitting system 11 performing beam splitting of the entering Brillouin scattering light, Rayleigh scattering light and reflected light;

In practical application, the beam splitting system 11 is a beam splitter.

The Brillouin spectrum detecting system 12 is located at the reflection direction of the beam splitter 11, the Brillouin scattering light, the Rayleigh scattering light and the reflected light reflected by the beam splitter 11 and enter the Brillouin spectrum detecting system 12.

The divided-aperture laser differential confocal detecting system 16 is located at the transmission direction of the beam splitter 11, the Brillouin scattering light, the Rayleigh scattering light and the reflected light pass through the beam splitter 11 and enter the divided-aperture laser differential confocal detecting system 16.

Step 1305, the Brillouin spectrum detecting system 12 performing Brillouin spectrum detection of the entering Brillouin scattering light, Rayleigh scattering light and reflected light to obtain the Brillouin spectrum information;

When dealing with the Brillouin scattering spectrum obtained by the Brillouin spectrum detecting system 12, the embodiment of the disclosure may perform Brillouin spectrum detection, Brillouin scattering spectrum axial response curve $I(\lambda_B)$ 33 in FIG. 12 is detected. $\lambda_B$ is the wavelength of the Brillouin scattering light excited from the measured sample 5 by the exciting light.

In an embodiment of the disclosure, the Brillouin spectrum detecting system 12 may include a second converging lens 13, a second spectrum detector 14 and a second detector 15.

In the embodiment, step 1305 may include the following steps:

Step S21, the entering Brillouin scattering light, Rayleigh scattering light and reflected light transmitting to the second spectrum detector 14 after converged by the second converging lens 13;

Step S22, the second spectrum detector 14 extracting the Brillouin spectrum from the entering Brillouin scattering light, Rayleigh scattering light and reflected light which pass through the beam splitting system 11;

Step S23, the second detector 15 detecting a relative intensity of Brillouin spectrum extracted by the second spectrum detector 14 to obtain the Brillouin spectrum signal of the measured sample 5.

In an embodiment of the disclosure, the second spectrum detector 14 may be a Brillouin spectrum detector, the detecting surface thereof may be located at the focus of the second converging lens 13;

The Brillouin spectrum detecting system 12 further includes a second pinhole 35.

The second pinhole 35 is located at the focus of the second converging lens 13, the detecting surface of the second spectrum detector 14 is located behind the second pinhole 35.

The Brillouin scattering light, the Rayleigh scattering light and the reflected light are focused in the second pinhole 35.

In the embodiment of the disclosure the step 1305 further includes the following step:

Step S24, filtering the stray light at the positions except the focus of the second condenser 13, with the result of increasing the signal-noise ratio of the Brillouin spectrum detection.

When only dealing with the Brillouin spectrum signal obtained by the Brillouin spectrum detecting system 12 which receives the Brillouin scattering light, the Rayleigh scattering light and the reflected light, the embodiment of the disclosure may perform a confocal Brillouin spectrum detection.

In another embodiment of the disclosure, as shown in FIG. 9, the Brillouin spectrum detecting system 12 may further include a third optical fiber terminal 45 and a third optical fiber 46, which may transmit scattering spectrum via optical fiber.

The third optical fiber terminal 45 is located at the focus of the second converging lens 13, the third optical fiber terminal 45 accesses to the third optical fiber 46.

In the embodiment of the disclosure, step 1305 may include the following steps of:

the third optical fiber terminal 45 transmitting the Brillouin scattering light, the Rayleigh scattering light and the reflected light to the second spectrum detector 14 via the third optical fiber 46.

Step 1306, the divided-aperture laser differential confocal detecting system 16 detecting Airy disks of the entering Brillouin scattering light, Rayleigh scattering light and reflected light.

When dealing with the subtraction signal obtained by the divided-aperture laser differential confocal detecting system 16, the embodiment of the disclosure may perform a tomography with high-resolution.

Since the Brillouin spectrum intensity is lower for $10^{-8}$ magnitudes than the intensity of the Rayleigh scattering light and the reflected light, which may be ignored compared with other system noises, thus there is no need to separate the Brillouin scattering light from the Rayleigh scattering light and reflected light.

In an embodiment of the disclosure, the divided-aperture laser differential confocal detecting system 16 includes a third converging lens 17 and an image acquisition system 18, the image acquisition system 18 may be a CCD, and its detecting surface is at the focus of the third converging lens 17.

In the embodiment of the disclosure, step 1306 may include the following steps:

Step S31, the entering Brillouin scattering light, Rayleigh scattering light and reflected light transmitting to the image acquisition system 18 after converged by the third converging lens 17;

Step S32, the image acquisition system 18 collecting the Airy disk of the entering Brillouin scattering light, Rayleigh scattering light and reflected light after being converged by the third converging lens 17.

In an embodiment of the disclosure, the detecting surface of the image acquisition system 18 is located at the focus of the third converging lens 17,

The entering Brillouin scattering light, the Rayleigh scattering light and the reflected light are focused on the detecting surface of the image acquisition system 18 via the third converging lens 17.

In another embodiment of the disclosure, as shown in FIG. 10, the divided-aperture laser differential confocal detecting system 16 may further include an image amplifying system 47, a third converging lens 17, an image amplifying system 47 and an image acquisition system 18 which are disposed in sequence.

In practical application, the image amplifying system 47 may be an amplifying objective, the object plane of the amplifying objective 47 is located at the focus of the third converging lens 17, the amplifying objective 47 may enlarge the converged spot of the third converging lens 17, the detecting surface of the image acquisition system 18 is located at the image surface of the image enlarging system 47, the image amplifying system 47 may enlarge the Airy disk detected by the image acquisition system 18, thereby increasing the accuracy of the divided-aperture laser differential confocal detecting system 16.

Step S1307, using the Airy disk detected by the divided-aperture laser differential confocal detecting system 16 and the sample position information obtained by the position sensor 25 to calculate profile information of the measured sample 5;

In practical application, the divided-aperture laser differential confocal detecting system 16 uses the characteristic that the lateral deviation of the detector may lead to phase shift of the axial response curve of the divided-aperture laser differential confocal microscopy, to realize the micro-area geometric position detection of the measured sample 5.

In an embodiment of the disclosure, step 1307 includes the following steps:

Step S41, performing a dividing process to the spot of the Rayleigh scattering light, the reflected light and the Brillouin scattering light, gets a detected area A 19 and a detected area B 20, and obtains the corresponding light intensity signals;

Step S42, the three-dimensional scanning system 24 driving the measured sample 5 to scan along the Z direction, which is the main axis direction of the objective 2, at the same time, differential subtraction of the two light intensity signals from the detected area A 19 and the detected area B 20 is performed to obtain a divided-aperture laser differential confocal axial response curve 31,

Wherein, the divided-aperture laser differential confocal axial response curve 31 includes a zero-crossing point. The zero-crossing point means the measured sample 5 is in a specific location that the light intensity signal of the detected area A 19 and the light intensity signal of the detected area B 20 are equal, and the zero-crossing point accurately corresponds to the focus of the objective 2;

Step S43, using the zero-crossing point to calculate axial position information of the measured sample 5;

Step S44, real-time monitoring the zero-crossing point, and fine tuning the position of the measured sample 5 via three-dimensional scanning system 24 to compensate the defocus error caused by environment deviation, to make the measured sample 5 located in the focus position of the objective 2 throughout;

Step S45, the position sensor 25 returning the lateral position information and the axial position information to the computer processing system 30.

In practical application, as shown in FIG. 12, the detected area A 19 and the detected area B 20 are disposed in the detected spot along the $x_d$ axis of the spot, the two detected micro-areas are symmetrical about the $y_d$ axis of the spot and have a drift $v_M$ relative to the $y_d$ axis. The intensity responses of the two detected areas $I_A(u,-v_M)$ and $I_B(u,v_M)$ are detected, the differential subtraction module 28 performs a differential subtraction of the detected responses to obtain the divided-aperture laser differential confocal axial response curve 31.

$$I(u,v_M)=I_A(u,-v_M)-I_B(u,-v_M)$$

Wherein $I(u,v_M)$ is the divided-aperture laser differential confocal axial response, $I_A(u,-v_M)$ is the axial response of the detected area A 19, $I_B(u,-v_M)$ is the axial response of the detected area B 20, $u$ is the axial normalized optical coordinate, $v_M$ is the deviation of the two detected areas. The "zero-crossing point" of the divided-aperture laser differential confocal axial response curve 31 accurately corresponds to the focus of the exciting light beam, according to the "zero-crossing point" of the response curve 31, the height information of the measured sample 5 is obtained, and combining with the position information feedback from the position sensor 25, the three-dimensional profile of the measured sample 5 can be reconstructed.

In the embodiment of the disclosure, by using radial polarized beam technology to compact Airy disk, when the signals of two detected areas are performed by differential subtraction module 28, the divided-aperture laser differential confocal axial response $I(u,v_M)$ is obtained, then the focus position of the exciting spot is captured accurately by the zero-crossing point, thus the embodiment of the disclosure may perform three-dimensional tomography with super-resolution.

In the embodiment of the disclosure, the spectrum information at the focus of the objective 2 is detected, but long term integration may cause system drift, this requires constantly correcting the position of the measured sample 5 to make the measured point located at the focus of the objective 2 throughout. Since traditional confocal system uses the maximum value of axial response to determine the focus position, it is not sensitive, the spatial resolution is reduced. Compared to traditional confocal system, the disclosure uses zero-crossing point to determine the focus, the sensitivity is improved observably, which is facilitate in real-time monitoring the focus position, as a result, the resolution increased.

Step 1308, a computer processing system 30 controlling a three-dimensional scanning system 24 to move the measured sample 5 to the next position, repeats step 1303 to step 1308 until the measurement is finished;

In practical application, the three-dimensional scanning system 24 is a three-dimensional object stage, which may move horizontally and vertically,

By the computer processing system 30 controlling the three-dimensional scanning system 24 to move the measured sample 5, the Rayleigh scattering light, the reflected light, the Raman scattering light and the Brillouin scattering light from different area of the measured sample 5 pass through the objective 2 and the collecting pupil 4.

Step 1309, using the position information of each detected point and the corresponding Raman spectrum signal and Brillouin spectrum signal to perform three-dimensional reconstruction and spectrum information fusion of the measured sample 5.

When dealing with the differential signal obtained by the divided-aperture laser differential confocal detecting system 16, the Raman spectrum signal obtained by the Raman spectrum detecting system 7 and the Brillouin spectrum signal obtained by the Brillouin spectrum detecting system 12 at the same time, the embodiment of the disclosure may perform micro-area mapping-spectrum tomography with high-resolution, and realize the geometric profile information of the measured sample 5 and the multi-property parameters detection of multi-spectrum information with high-resolution.

Embodiment 4

As shown in FIG. 3 to FIG. 12, the disclosure further discloses a divided-aperture laser differential confocal Brillouin-Raman spectrum measuring device, the device includes:

a light source system 1 configured to generate a exciting light beam;

the exciting light beam is focused onto a measured sample 5 by an objective 2 after passing through an illuminating pupil 3, and the excited light beam is obtained, the illuminating pupil 3 is placed on the pupil plane of the objective 2, the excited light beam includes Raman scattering light, Brillouin scattering light, Rayleigh scattering light and reflected light;

the excited light beam passes a collecting pupil 4 on the pupil plane of the objective 2 and reach a dichroic optical system 6;

the dichroic optical system 6 is configured to separate the Raman scattering light from the entering excited light beam losslessly;

the Raman scattering light transmits through the dichroic optical system 6 enters a Raman spectrum detecting system 7;

the Brillouin scattering light, Rayleigh scattering light and the reflected light are reflected by the dichroic optical system 6 and enter a beam splitting system 11;

the Raman spectrum detecting system 7 is configured to perform spectrum detection of the entering Raman scattering light to obtain the Raman spectrum information;

the beam splitting system 11 is configured to perform light partition of the entering Brillouin scattering light, Rayleigh scattering light and reflected light;

a part of the Brillouin scattering light, the Rayleigh scattering light and reflected light are reflected by the beam splitting system 11 and enter a Brillouin spectrum detecting system 12;

the rest of the Brillouin scattering light, the Rayleigh scattering light and reflected light transmits through the beam splitting system 11 and enter a divided-aperture laser differential confocal detecting system 16;

the Brillouin spectrum detecting system 12 is configured to perform Brillouin spectrum detection of the entering Brillouin scattering light, Rayleigh scattering light and reflected light to obtain the Brillouin spectrum information;

the divided-aperture laser differential confocal detecting system 16 is configured to detect an Airy disk of the entering Brillouin scattering light, Rayleigh scattering light and reflected light;

a data processing unit 26 is configured to calculate the position information of the measured sample 5 using the Airy disk detected by the divided-aperture laser differential confocal detecting system 16 and the position information of the measured sample 5 obtained by a position sensor 25;

a computer processing system 30 is configured to control a three-dimensional scanning system 24 to move the measured sample 5 to next position, repeats the step 1303 to step 1308 until the measurement is finished;

a data fusion module 29 is configured to perform 3D reconstruction and spectrum information fusion of the measured sample 5 using position information of each measured point and the corresponding Raman spectrum information and Brillouin spectrum information.

In an embodiment of the disclosure, the data processing unit 26 may further include the following modules:

a spot dividing and detecting module 27, which is configured to divide the spot of the Brillouin scattering light, the Rayleigh scattering light and the reflected light, and get the detected area A 19 and the detected area B 20, and obtain the corresponding light intensity response;

the three-dimensional scanning system 24, further configured to drive the measured sample 5 to scan along the main axis of the objective 2;

a differential subtraction module 28 is configured to perform differential subtraction of the light intensity responses of the detected area A 19 and the detected area B 20, obtains the divided-aperture laser differential confocal axial response curve 31, the divided-aperture differential confocal axial response curve 31 includes a zero-crossing point, the zero-crossing point is the point at which the light intensity responses of the detected area A 19 and the detected area B 20 are the equal, the zero-crossing point accurately corresponds to the focus of the objective 2.

The data processing unit 26 is further configured to calculate the axial position of the measured sample 5 using the zero-crossing point;

monitoring the zero-crossing point, fine tuning the position of the measured sample 5 via the three-dimensional scanning system 24, to compensate the defocus error generated by environment deviation, to make detected point of the measured sample 5 always locates in the focus of the objective 2.

The position sensor 25 is configured to return the information of lateral position and axial position to the computer processing system 30.

In an embodiment of the disclosure, a light beam modulating system 36 is disposed between the light source system 1 and the illuminating pupil 3.

The light beam modulating system 36 includes a fourth converging lens 37, a third pinhole 38 located at the focus of the fourth converging lens 37, and a fifth converging lens 39 whose focus is at the third pinhole 38.

The exciting light beam emitted from the light source system 1 enters the third pinhole 38 to be a point light source converged by the fourth converging lens 37, and then passes the fifth converging lens 39 whose focus is at the third pinhole 38, a parallel light beam is formed after being collimated and expanded.

In an embodiment of the disclosure, a collimating lens 40 and a first optical fiber terminal 41 at the focus of the collimating lens 40 are disposed between the light source system 1 and the illuminating pupil 3. The first optical fiber terminal 41 accesses the first optical fiber 42.

The exciting light beam transmits to the first optical fiber terminal 41 via the first optical fiber 42.

The first optical fiber terminal 41 emits the exciting light beam;

The exciting light beam is trasnmited to the illuminating pupil 3 which is on the pupil plane of the objective 2 after being collimated by the collimating lens 40.

In an embodiment of the disclosure, the Raman spectrum detecting system 7 includes a first converging lens 8, a first spectrum detector 9 and an first detector 10.

The first converging lens 8 is configured to focus the Raman scattering light separated by the dichroic optical system 6;

The spectrum detector 9 is configured to extract Raman spectrum signal from the Raman scattering light;

The first detector 10 is configured to measure the relative intensity of light with different wavelength of the Raman spectrum signal to obtain the spectrum information of the Raman spectrum.

In an embodiment of the disclosure, the detecting surface of the first spectrum detector 9 is located at the focus of the first converging lens 8, the Raman spectrum detecting system 7 further includes a first pinhole 34;

The first pinhole 34 is disposed at the focus of the first converging lens 8, the detecting surface of the first spectrum detector 9 is located behind the first pinhole 34;

The first pinhole is configured to filter the stray light except the focus of the first converging lens 8.

When only dealing with the Raman spectrum signal obtained by the Raman spectrum detecting system 7 which receives the Raman scattering light, the confocal Raman spectrum detecting device is constructed.

In an embodiment of the disclosure, the Raman spectrum detecting system 7 further includes a second optical fiber terminal 43;

The second optical fiber terminal 43 is disposed at the focus of the first converging lens 8, the second optical fiber terminal 43 accesses the second optical fiber 44.

The second optical fiber terminal 43 is configured to transmit the Raman scattering light to the first spectrum detector 9 via the second optical fiber 44.

In an embodiment of the disclosure, the Brillouin spectrum detecting system 12 includes a second converging lens 13, a second spectrum detector 14 and a second detector 15.

The second converging lens 13 is configured to converge the entering Brillouin scattering light, Rayleigh scattering light and reflected light and transmit into the second spectrum detector 14.

The second spectrum detector 14 is configured to extract Brillouin scattering spectrum from the entering Brillouin scattering light, Rayleigh scattering light and reflected light.

The second detector 15 is configured to detect the relative intensity of the Brillouin spectrum extracted by the second spectrum detector 14 to obtain the spectrum information of the Brillouin spectrum.

In an embodiment of the disclosure, the detecting surface of the second spectrum detector 14 is located at the focus of the second converging lens 13, the Brillouin spectrum detecting system 12 further includes a second pinhole 35.

The second pinhole 35 is disposed at the focus of the second converging lens 13, the detecting surface of the second spectrum detector 14 is located behind the second pinhole 35.

The second pinhole 35 is configured to filter the stray light except the focus of the second condenser 13.

When only dealing with the Brillouin spectrum signal obtained by the Brillouin spectrum detecting system 12 which receives the Brillouin scattering light, the Rayleigh scattering light and the reflected light, a confocal Brillouin spectrum detecting device is constructed.

In an embodiment of the disclosure, the Brillouin spectrum detecting system 12 further includes a third optical fiber terminal 45;

the third optical fiber terminal 45 is located at the focus of the second converging lens 13, the third optical fiber terminal 45 accesses to the third optical fiber 46.

the third optical fiber terminal 45 is configured to transmit the Brillouin scattering light, the Rayleigh scattering light and the reflected light via the third optical fiber 46 to the second spectrum detector 14.

In an embodiment of the disclosure, the divided-aperture laser differential confocal detecting system 16 includes a third converging lens 17 and an image acquisition system 18;

the third converging lens 17 is configured to converge and transmit the entering Brillouin scattering light, Rayleigh scattering light and reflected light to the image acquisition system 18;

the image acquisition system 18 is configured to collect the airy disks of the converged Brillouin scattering light and Rayleigh scattering light and transmission light.

In an embodiment of the disclosure, the detecting surface of the image acquisition system 18 is located at the focus of the third converging lens 17.

the entering Brillouin scattering light, Reyleigh light and reflected light is converged to the detecting surface of the image acquisition system 18 via the third converging lens 17.

In an embodiment of the disclosure, the divided-aperture laser differential confocal detecting system 16 further includes an image amplifying system 47.

The object plane of the image amplifying system 47 is located at the focus of the third converging lens 17, and the detecting surface of the image acquisition system 18 is located at the image plane of the image amplifying system 47.

In practical application, the exciting light beam further includes: linearly polarized beam, circular polarized beam and other polarized beams, it may also be structured beam generated by the pupil filter technology.

## Claims

1. A divided-aperture laser differential confocal Brillouin-Raman spectrum measuring method comprising:

    step 1031, a light source system (1) generating an exciting light beam;
    wherein the exciting light beam is focused onto a measured sample (5) via an illuminating pupil (3) which is on a pupil plane of an objective (2), and obtains a sample excited light beam; the excited light beam includes Raman scattering light, Brillouin scattering light, Rayleigh scattering light and reflected light;
    the sample excited light beam passes a collecting pupil (4) on the pupil plane of the objective (2) and reaches a dichroic optical system (6);
    step 1302, the dichroic optical system (6) separating the Raman scattering light from the entering sample excited light beam;
    wherein the Raman scattering light transmits through the dichroic optical system (6) and enters a Raman spectrum detecting system (7);
    the Brillouin scattering light, the Rayleigh scattering light and the reflected light which are reflected by the dichroic optical system (6) and enters a beam splitting system (11);
    step 1303, the Raman spectrum detecting system (7) performing spectrum detection of the entering Raman scattering light to obtain the Raman spectrum signal;
    step 1304, the beam splitting system (11) performing beam split of the entering Brillouin scattering light, Rayleigh scattering light and reflected light;
    wherein the Brillouin scattering light, the Rayleigh scattering light and the reflected light reflected by the beam splitting system (11) and enter a Brillouin spectrum detecting system (12);
    the Brillouin scattering light, the Rayleigh scattering light and the reflected light transmit through the beam splitting system (11) and enter a divided-aperture laser differential confocal detecting system (16);
    step 1305, the Brillouin spectrum detecting system (12) performing spectrum detection of the entering Brillouin scattering light, Rayleigh scattering light and reflected light to obtain the Brillouin spectrum signal;
    step 1306, the divided-aperture laser differential confocal detecting system (16) detecting an Airy disk of the entering Brillouin scattering light, Rayleigh scattering light and reflected light;
    step 1307, performing a dividing process to the Airy disk of the Brillouin scattering light, the Rayleigh scattering light and the reflected light, obtaining a first detecting area (19) and a second detecting area (20), and obtaining corresponding light intensity signals; performing a differential subtraction processing to the light intensity signal in the first detecting area (19) and the light intensity signal in the second detecting area (20), to obtain a divided-aperture laser differential confocal axial response curve (31), the divided-aperture laser differential confocal axial response curve includes a zero-crossing point, the zero-crossing point accurately corresponds to the focus of the objective (2); using the zero-crossing point to calculate position information of the measured sample (5);
    step 1308, a computer processing system (30) controlling a three-dimensional scanning system (24) to move the measured sample (5) to the next detected point, repeats the step 1303 to the step 1308 until the measurement is finished;
    step 1309, performing 3D reconstruction processing and spectrum information fusion processing to the measured sample (5) using position information of each detected point and the corresponding Raman and Brillouin spectrum signal and beam splitting system (11).

2. The method according to claim 1, wherein step 1307 further comprises:

    the three-dimensional scanning system (24) driving the measured sample (5) and scanning the measured sample (5) along a main axis direction of the objective (2), at the same time, monitoring the zero-crossing point, fine tuning the position of the measured sample (5) via the three-dimensional scanning system (24) to compensate the defocus error caused by environment deviation, and to make the detected point of the measured sample (5) located in the focus of the objective (2) throughout;
    the position sensor (25) returning lateral and axial position information to the computer processing system (30).

3. The method according to claim 1, wherein a light beam modulating system (36) is disposed between the light source system (1) and the illuminating pupil (3);
    the light beam modulating system (36) includes a fourth converging lens (37), a third pinhole (38) which is at the focus of the fourth converging lens (37), and a fifth converging lens (39) whose focus is at the third pinhole (38); the fourth converging lens (37), the third pinhole (38) and the fifth converging lens (39) are disposed along the exciting light path in sequence;
    the exciting light beam enters the third pinhole (38) after being converged by the fourth converging lens (37) and forms a point light source, then it is collimated and expanded to be a parallel exciting light beam by the fifth converging lens (39) whose focus is at the third pinhole (38).

4. The method according to claim 1, wherein a collimating lens (40) and a first optical fiber terminal (41) at the focus of the collimating lens (40) are disposed between the light source system (1) and the lighting pupil (3), and the first optical fiber terminal (41) accesses a first optical fiber patch cord (42);
the laser beam is transmitted to the first optical fiber terminal (41) via the first optical fiber patch cord (42);
the first optical fiber terminal (41) emits laser beam;
the laser beam is transmitted to the lighting pupil (3) on the pupil plane of the measured objective lens (2) in parallel after it is collimated by the collimating lens (40).

5. The method according to claim 1, wherein the Raman spectrum detecting system (7) comprises a first condenser (8), a first spectrum detector (9) and a first detector (10);
step 1303 comprises:

the first condenser (8) focusing the Raman scattering light separated by the dichroic optical system (6);
the first spectrum detector (9) extracting Raman spectrum signal from the focused Raman scattering light;
the first detector (10) detecting a relative intensity of spectrum with different wavelength of the Raman scattering light to obtain the Raman spectrum information.

6. The method according to claim 5, wherein a detecting plane of the first spectrum detector (9) is located at the focus of the first converging lens (8), the Raman spectrum detecting system (7) further comprises a first pinhole (34);
the first pinhole (34) is disposed at the focus of the first converging lens (8), the detecting plane of the first spectrum detector (9) is located behind the first pinhole (34);
step 1303 further comprises:
the first pinhole (34) filtering stray light at the position except the focus of the first converging lens (8).

7. The method according to claim 5, wherein the Raman spectrum detecting system (7) further comprises a second optical fiber terminal (43) and a second optical fiber (44);
the second optical fiber terminal (43) accesses the second optical fiber (44);
step 1303 further comprises:
the second optical fiber terminal (43) transmitting the Raman scattering light into the first spectrum detector (9) via the second optical fiber (44).

8. The method according to claim 1, wherein the Brillouin spectrum detecting system (12) comprises a second converging lens (13), a second spectrum detector (14) and a second detector (15);
step 1305 comprises:

the entering Brillouin scattering light, Rayleigh scattering light and reflected light transmitting to the second spectrum detector (14) after being converged by the second converging lens (13);
the second spectrum detector (14) extracting the Brillouin scattering light (11) from the entering Brillouin scattering light, Rayleigh scattering light and reflected light;
the second detector (15) detecting a relative intensity of spectrum with different wavelength of the Brillouin scattering light extracted by the second spectrum detector (14) to obtain the Brillouin spectrum signal.

9. The method according to claim 8, wherein the detecting plane of the second spectrum detector (14) is located at the focus of the second converging lens (13), the Brillouin spectrum detecting system (12) further comprises a second pinhole;
the second pinhole (35) is disposed at the focus of the second converging lens (13), the detecting plane of the second spectrum detector (14) is located behind the second pinhole (35);
step 1305 further comprises:
the second pinhole (35) filtering the stray light at the position except the focus of the second converging lens (13).

10. The method according to claim 8, wherein the Brillouin spectrum detecting system (12) further comprises a third optical fiber terminal (45) and a third optical fiber (46);
the third optical fiber terminal (45) is located at the focus of the second converging lens (13), the third optical fiber terminal (45) accesses to the third optical fiber (46);
step 1305 further comprises:
the third optical fiber terminal (45) transmitting the Brillouin scattering light, the Rayleigh scattering light and the reflected light to the second spectrum detector (14) via the third optical fiber (46).

11. The method according to claim 1, wherein the divided-aperture laser differential confocal detecting system (16) comprises a third converging lens (17) and an image acquisition system (18);
step 1306 comprises:

the entering Brillouin scattering light, Rayleigh scattering light and reflected light transmitting to the image acquisition system (18) after converged by the third converging lens (17);

the image acquisition system (18) detecting the Airy disk of the converged Brillouin scattering light, Rayleigh scattering light and reflected light.

12. The method according to claim 11, wherein the detecting plane of the image acquisition system (18) is located at the focus of the third converging lens (17); the entering Brillouin scattering light, Rayleigh scattering light and reflected light are converged to the detecting plane of the image acquisition system (18) via the third converging lens (17).

13. The method according to claim 11, wherein the divided-aperture laser differential confocal detecting system (16) further comprises an image amplifying system (47); the object plane of the image amplifying system (47) is at the focus of the third converging lens (17), the detecting plane of the image acquisition system (18) is at the image plane of the image amplifying system (47).

14. The method according to claim 1, wherein the exciting light beam comprises a circular polarized beam, a linear polarized beam or a structured beam produce by a pupil filter.

15. A divided-aperture laser differential confocal Brillouin-Raman spectrum measuring device comprising:

a light source system (1) configured to generate a exciting light beam; wherein the exciting light beam is focused onto a measured sample (5) by an objective (2) after passing through an illuminating pupil (3) which is on a pupil plane of the objective (2), and obtains a sample excited light beam; the sample excited light beam includes excited Raman scattering light, Brillouin scattering light, Rayleigh scattering light and reflected light; the sample excited light beam passes through a collecting pupil (4) which is on the pupil plane of the objective (2) and reaches a dichroic optical system (6); the dichroic optical system (6) configured to separate the Raman scattering light from the entering sample excited light beam; the Raman scattering light transmits through the dichroic optical system (6) and enters a Raman spectrum detecting system (7); the Brillouin scattering light, Rayleigh scattering light and the reflected light are reflected by the dichroic optical system (6) and enter a beam splitting system (11); the Raman spectrum detecting system (7) configured to perform spectrum detection of the entering Raman scattering light to obtain the Raman spectrum signal; the beam splitting system (11) configured to perform light split of the entering Brillouin scattering light, Rayleigh scattering light and reflected light; the Brillouin scattering light, the Rayleigh scattering light and reflected light are reflected by the beam splitting system (11) and enter a Brillouin spectrum detecting system (12); the Brillouin scattering light, the Rayleigh scattering light and the reflected light transmit through the beam splitting system (11) and enter a divided-aperture laser differential confocal detecting system (16); the Brillouin spectrum detecting system (12) is configured to perform spectrum detection of the entering Brillouin scattering light, Rayleigh scattering light and reflected light to obtain the Brillouin spectrum signal; the divided-aperture laser differential confocal detecting system (16) is configured to detect an Airy disk of the entering Brillouin scattering light, Rayleigh scattering light and reflected light; a data processing unit (26) including a spot dividing and detecting module (27) and a differential subtraction module (28) configured to process the detected Airy disk and obtain a divided-aperture laser differential confocal axial response (31) and configured to calculate three-dimensional position information of the measured sample (5) using the Airy disk detected by the divided-aperture laser differential confocal detecting system (16) and the sample displacement obtained by a position sensor (25); a computer processing system (30) configured to control a three-dimensional scanning system (24) to move the measured sample (5) to next measured point, repeats the step 1303 to the step 1308 until the measurement is finished; a data fusion module (29) configured to perform 3D reconstruction and spectrum information fusion of the measured sample (5) using position information of each measured point and the corresponding Raman spectrum signal and Brillouin spectrum signal.

**Patentansprüche**

1. Verfahren zur Messung des Laser-Differenzial-Konfokal-Brillouin-Raman-Spektrums mit geteilter Apertur, umfassend:

Stufen 1031, ein Lichtquellensystem (1), das einen anregenden Lichtstrahl erzeugt; wobei der anregende Lichtstrahl mittels einer Beleuchtungspupille (3), die sich auf einer Pupillenebene eines Objektivs (2) befindet, auf eine Messprobe (5) fokussiert wird und einen durch die Probe angeregten Lichtstrahl erhält; der angeregte Lichtstrahl enthält Raman-Streulicht, Brillouin-Streulicht, Rayleigh-Streulicht und reflektiertes Licht;

der durch die Probe angeregte Lichtstrahl eine Sammelpupille (4) auf der Pupillenebene des Objektivs (2) passiert und ein dichroitisches optisches System (6) erreicht;

Stufe 1302, das dichroitische optische System (6), das das Raman-Streulicht von dem durch die eintretende Probe angeregten Lichtstrahl getrennt;

wobei das Raman-Streulicht durch das dichroitische optische System (6) übertragen wird und in ein Raman-Spektrum-Detektionssystem (7) eintritt;

das Brillouin-Streulicht, das Rayleigh-Streulicht und das reflektierte Licht, das von dem dichroitischen optischen System (6) reflektiert wird und in ein Strahlaufspaltungsystem (11) eintritt;

Stufe 1303, das Raman-Spektrum- Detektionssystem (7), das die Spektraldetektion des eintretenden Raman-Streulichts durchführt um das Raman-Spektrumsignal zu erhalten;

Stufe 1304, das Strahlaufspaltungsystem (11), das die Strahlaufspaltung des eintretenden Brillouin-Streulichts, des Rayleigh-Streulichts und des reflektierten Lichts durchführt;

wobei das Brillouin-Streulicht, das Rayleigh-Streulicht und das reflektierte Licht, das von dem Strahlaufspaltungsystem (11) reflektiert wird, und in ein Brillouin-Spektrum-Detektionssystem (12) eintritt;

das Brillouin-Streulicht, das Rayleigh-Streulicht und das reflektierte Licht durch das Strahlaufspaltungsystem (11) übertragen werden und in ein Laser-Differenzial-Konfokal-Detektionssystem mit geteilter Apertur (16) eintritt;

Stufe 1305, das Brillouin-Spektrum-Detektionssystem (12), das die Spektraldetektion des eintretenden Brillouin-Streulichts, des Rayleigh-Streulichts und des reflektierten Lichts durchführt, um das Brillouin-Spektrumsignal zu erhalten;

Stufe 1306, das Laser-Differenzial-Konfokal-Detektionssystem (16) mit geteilter Apertur, das eine Airy-Scheibe des eintretenden Brillouin-Streulichts, Rayleigh-Streulichts und reflektierten Lichts detektiert;

Stufe 1307 Durchführen eines Teilungsprozess an der Airy-Scheibe des Brillouin-Streulichts, des Rayleigh-Streulichts und des reflektierten Lichts, wodurch ein erster Detektionsbereich (19) und ein zweiter Detektionsbereich (20) und entsprechende Lichtintensitätssignale erhalten werden; Durchführen einer differentiellen Subtraktionsbehandlung für das Lichtintensitätssignal in dem ersten Detektionsbereich (19) und das Lichtintensitätssignal in dem zweiten Detektionsbereich (20), um eine Laser-Differential-Konfokal-Axial-Reaktionskurve (31) mit geteilter Apertur zu erhalten, die Laser-Differential-Konfokal-Axial-Reaktionskurve mit geteilter Apertur einen Nulldurchgangspunkt enthält, der Nulldurchgangspunkt genau dem Fokus des Objektivs (2) entspricht; unter Verwendung des Nulldurchgangspunktes wird die Positionsinformation der Messprobe (5) berechnet;

Stufe 1308, ein Computer-Bearbeitungssystem (30), das ein dreidimensionales Abtastsystem (24) steuert, um die Messprobe (5) zum nächsten erfassten Punkt zu bewegen, die Stufe 1303 zur Stufe 1308 wiederholt, bis die Messung beendet ist;

Stufe 1309, Durchführung der 3D-Rekonstruktionsbearbeitung und der Bearbeitung der Spektralinformationsfusion zur Messprobe (5) unter Verwendung der Positionsinformation jedes detektierten Punktes und des entsprechenden Raman- und Brillouin-Spektrums-Signal- und Strahlaufspaltungsystems (11).

2. Verfahren nach Anspruch 1, wobei die Stufe 1307 weiterhin umfasst:

das dreidimensionale Abtastsystem (24), das die Messprobe (5) antreibt und die Messprobe (5) entlang einer Hauptachsenrichtung des Objektivs (2) abtastet, gleichzeitig den Nulldurchgangspunkt überwacht, die Position der Messprobe (5) mittels des dreidimensionalen Abtastsystems (24) feinabstimmt, um den durch die Umgebungsabweichung bewirkten Defokussierungsfehler zu kompensieren und den detektierten Punkt der Messprobe (5) durchgehend in den Fokus des Objektivs (2) zu bringen

der Positionssensor (25), der laterale und axiale Positionsinformationen an das Computer-Bearbeitungssystem (30) zurücksendet.

3. Verfahren nach Anspruch 1, wobei ein Lichtstrahl-Modulationssystem (36) zwischen dem Lichtquellensystem (1) und der Beleuchtungspupille (3) angeordnet ist;

das Lichtstrahl-Modulationssystem (36) eine vierte Sammellinse (37), eine dritte Nadelloch (38), die sich im Fokus der vierten Sammellinse (37) ist, und eine fünfte Sammellinse (39), deren Fokus sich an der dritten Nadelloch (38) ist, enthält; die vierte Sammellinse (37), die dritte Nadelloch (38) und die fünfte Sammellinse (39) sind entlang des anregenden Lichtweges nacheinander angeordnet;

der anregende Lichtstrahl in die dritte Nadelloch (38) eintritt, nachdem dieser durch die vierte Sammellinse (37) konvergiert wurde und eine Punktlichtquelle bildet, dann wird er kollimiert und durch die fünfte Sammellinse (39), deren Fokus auf der dritten Nadelloch (38) ist, zu einem parallelen anregenden Lichtstrahl aufgeweitet.

4. Verfahren nach Anspruch 1, wobei eine Kollimationslinse (40) und ein erster Faseroptischer Anschluss (41) im Fokus der Kollimationslinse (40) zwischen dem Lichtquellensystem (1) und der Beleuchtungspupille (3) angeordnet sind, und der erste Faseroptische Anschluss (41) auf ein erstes Faseroptisches Verbindungskabel (42) zugreift;
der Laserstrahl mittels des ersten Faseroptisches Verbindungskabels (42) zum ersten Faseroptische Anschluss (41) übertragen wird;
der erste Faseroptische Anschluss (41) emittiert einen Laserstrahl;
der Laserstrahl nach der Kollimation durch die Kollimationslinse (40) parallel zur Beleuchtungspupille (3) in der Pupillenebene der gemessenen Objektivlinse (2) übertragen wird.

5. Verfahren nach Anspruch 1, wobei das Raman-Spektrum-Detektionssystem (7) einen ersten Kondensator (8), einen ersten Spektrum-Detektor (9) und einen ersten Detektor (10) umfasst
Stufe 1303 umfasst:

der erste Kondensator (8) fokussiert das Raman-Streulicht, das durch das dichroitische optische System (6) getrennt ist;
der erste Spektrum-Detektor (9), der das Raman-Spektrum-Signal aus dem fokussierten Raman-Streulicht extrahiert;
der erste Detektor (10), der eine relative Intensität des Spektrums mit unterschiedlicher Wellenlänge des Raman-Streulichts detektiert, um die Information des Raman-Spektrums zu erhalten.

6. Verfahren nach Anspruch 5, wobei sich eine Detektionsebene des ersten Spektrum-Detektors (9) im Fokus der ersten Sammellinse (8) befindet, das Raman-Spektrum-Detektionssystem (7) weiterhin ein erstes Nadelloch (34) umfasst;
die erste Nadelloch (34) im Fokus der ersten Sammellinse (8) angeordnet ist, die Detektionsebene des ersten Spektrum-Detektors (9) befindet sich hinter der ersten Nadelloch (34);
Stufe 1303 umfasst weiterhin:
die erste Nadelloch (34), die das Störlicht an der Stelle außer dem Fokus der ersten Sammellinse (8) filtert.

7. Verfahren nach Anspruch 5, wobei das Raman-Spektrum-Detektionssystem (7) weiterhin ein zweites Faseroptischer Anschluss (43) und eine zweite Faseroptik (44) umfasst;
der zweite Faseroptischer Anschluss (43) auf den zweiten Faseroptik (44) zugreift;
Stufe 1303 weiterhin umfasst:
das zweite Faseroptischer Anschluss (43), das das Raman-Streulicht über die zweite Faseroptik (44) in den ersten Spektrum-Detektor (9) überträgt.

8. Verfahren nach Anspruch 1, wobei das Brillouin-Spektrum-Detektionssystem (12) eine zweite Sammellinse (13), einen zweiten Spektrum-Detektor (14) und einen zweiten Detektor (15) umfasst;
Stufe 1305 umfasst:

das eintretende Brillouin-Streulicht, das Rayleigh-Streulicht und das reflektierte Licht, die zu dem zweiten Spektrum-Detektor (14) übertragen werden, nachdem sie durch die zweite Sammellinse (13) konvergiert wurden;
der zweite Spektrum-Detektor (14), der das Brillouin-Streulicht (11) aus dem eintretenden Brillouin-Streulicht, dem Rayleigh-Streulicht und dem reflektierten Licht extrahiert;
der zweite Detektor (15), der eine relative Intensität des Spektrums mit unterschiedlicher Wellenlänge des vom zweiten Spektrum-Detektor (14) extrahierten Brillouin-Streulichts detektiert, um das Brillouin-Spektrumsignal zu erhalten.

9. Verfahren nach Anspruch 8, wobei die Detektionsebene des zweiten Spektrum-Detektors (14) im Fokus der zweiten Sammellinse (13) befindet, das Brillouin-Spektrum-Detektionssystem (12) weiterhin eine zweite Nadelloch umfasst;
die zweite Nadelloch (35) im Fokus der zweiten Sammellinse (13) angeordnet ist, die Detektionsebene des zweiten Spektrum-Detektors (14) befindet sich hinter der zweiten Nadelloch (35);
Stufe 1305 weiterhin umfasst:
die zweite Nadelloch (35), die das Störlicht an der Stelle außer dem Fokus der zweiten Sammellinse (13) filtert.

10. Verfahren nach Anspruch 8, wobei das Brillouin-Spektrum- Detektionssystem (12) weiterhin ein drittes Faseroptischer Anschluss (45) und eine dritte Faseroptik (46) umfasst;
der dritte Faseroptischer Anschluss (45) im Fokus der zweiten Sammellinse (13) angeordnet ist, der dritte Faseroptischer Anschluss (45) auf den dritten Faseroptik (46) zugreift;
Stufe 1305 weiterhin umfasst:
das dritte Faseroptischer Anschluss (45), das das Brillouin-Streulicht, das Rayleigh-Streulicht und das reflektierte Licht mittels der dritten Faseroptik (46) zu dem zweiten Spektrum-Detektor (14) überträgt.

11. Verfahren nach Anspruch 1, wobei das Laser-Differential-Konfokal-Detektionssystem (16) mit geteilter Apertur eine dritte Sammellinse (17) und ein Bilderfassungssystem (18) umfasst;
Stufe 1306 umfasst:

das eintretende Brillouin-Streulicht, das Rayleigh-Streulicht und das reflektierte Licht, die zu dem Bilderfassungssystem (18) übertragen werden, nachdem diese durch die dritte Sammellinse (17) konvergiert wurden;

das Bilderfassungssystem (18), das die Airy-Scheibe des konvergierten Brillouin-Streulichts, des Rayleigh-Streulichts und des reflektierten Lichts detektiert.

12. Verfahren nach Anspruch 11, wobei die Detektionsebene des Bilderfassungssystems (18) im Fokus der dritten Sammellinse (17) befindet;

das eintretende Brillouin-Streulicht, das Rayleigh-Streulicht und das reflektierte Licht werden über die dritte Sammellinse (17) auf die Detektionsebene des Bilderfassungssystems (18) konvergiert.

13. Verfahren nach Anspruch 11, wobei das Laser-Differential-Konfokal-Detektionssystem (16) mit geteilter Apertur weiterhin ein Bildverstärkungssystem (47) umfasst;

die Objektivebene des Bildverstärkungssystems (47) im Fokus der dritten Sammellinse (17) ist, die Detektionsebene des Bilderfassungssystems (18) in der Bildebene des Bildverstärkungssystems (47) ist.

14. Verfahren nach Anspruch 1, wobei der anregende Lichtstrahl einen zirkulär polarisierten Strahl, einen linear polarisierten Strahl oder einen strukturierten Strahl umfasst, der durch ein Pupillenfilter erzeugt wird.

15. Verfahren zur Messung des Laser-Differenzial-Konfokal-Brillouin-Raman-Spektrums mit geteilter Apertur, umfassend:

ein Lichtquellensystem (1), so konfiguriert, dass ein anregender Lichtstrahl erzeugt wird; wobei der anregende Lichtstrahl nach dem Durchgang durch eine Beleuchtungspupille (3), die sich in einer Pupillenebene des Objektivs (2) ist, durch ein Objektiv (2) auf eine Messprobe (5) fokussiert wird und einen durch die Probe angeregten Lichtstrahl erhält;

der Probe angeregte Lichtstrahl enthält angeregtes Raman-Streulicht, Brillouin-Streulicht, Rayleigh-Streulicht und reflektiertes Licht;

der durch die Probe angeregte Lichtstrahl durch eine Sammelpupille (4), die sich in der Pupillenebene des Objektivs (2) ist, durchgehen und ein dichroitisches optisches System (6) erreicht;

das dichroitische optische System (6), so konfiguriert, dass es das Raman-Streulicht von dem in die eintretende Probe angeregten Lichtstrahl getrennt;

das Raman-Streulicht wird durch das dichroitische optische System (6) übertragen und in ein System zur Raman-Spektrum-Detektionssystem (7) eintritt;

das Brillouin-Streulicht, das Rayleigh-Streulicht und das reflektierte Licht werden von der dichroitischen Optik (6) reflektiert und eintreten in ein Strahlspaltungssystem (11);

das Raman-Spektrum-Detektionssystem (7), so konfiguriert, dass es eine Spektraldetektion des eintretenden Raman-Streulichts durchführt, um das Raman-Spektrumsignal zu erhalten;

das Strahlspaltungssystem (11), so konfiguriert, dass es eine Lichtspaltung des eintretenden Brillouin-Streulichts, des Rayleigh-Streulichts und des reflektierten Lichts durchführt;

das Brillouin-Streulicht, das Rayleigh-Streulicht und das reflektierte Licht von dem Strahlaufspaltungsystem (11) reflektiert und in ein Brillouin-Spektrum-Detektionssystem (12) eintritt;

das Brillouin-Streulicht, das Rayleigh-Streulicht und das reflektierte Licht durch das Strahlaufspaltungsystem (11) übertragt und in ein Laser-Differential-Konfokal-Detektionssystem (16) mit geteilter Apertur eintritt;

das Brillouin-Spektrum-Detektionssystem (12) so konfiguriert ist, dass es eine Spektrumserfassung des eintretenden Brillouin-Streulichts, des Rayleigh-Streulichts und des reflektierten Lichts durchführt, um das Brillouin-Spektrumsignal zu erhalten;

das Laser-Differential-Konfokal-Detektionssystem (16) mit geteilter Apertur ist so konfiguriert, dass es eine Airy-Scheibe des eintretenden Brillouin-Streulichts, Rayleigh-Streulichts und reflektierten Lichts detektiert;

eine Datenbearbeitungseinheit (26), die ein Punktteilungs- und Detektionsmodul (27) und ein Differential-Subtraktionsmodul (28) enthält, so konfiguriert, dass sie die detektierte Airy-Scheibe bearbeitet und eine Laser-Differential-Konfokal-Axial-Reaktion (31) mit geteilter Apertur erhält und so konfiguriert, dass diese dreidimensionale Positionsinformationen der Messprobe (5) unter Verwendung der durch das Differential-Konfokal-Differential-Detektionssystem (16) mit geteilter Apertur detektierten Airy-Scheibe und der durch einen Positionssensor (25) erhaltenen Probenverschiebung berechnet;

ein Computer-Bearbeitungssystem (30), so konfiguriert, dass es ein dreidimensionales Abtastsystem (24) steuert, um die Messprobe (5) zum nächsten Messpunkt zu bewegen, den Stufe 1303 bis zum Stufe 1308 wiederholt, bis die Messung beendet ist;

ein Datenfusionsmodul (29), so konfiguriert, dass es eine 3D-Rekonstruktion und eine Spektralinformationsfusion der Messprobe (5) unter Verwendung von Positionsinformationen jedes Messpunkts und des entsprechenden Raman-Spektrumsignals und Brillouin-Spektrumsignals durchführt.

## Revendications

1. Méthode de mesure du spectre Brillouin-Raman confocale différentielle à laser à ouverture divisée comprenant :

étape 1031, un système de source lumineuse (1) générant un faisceau lumineux d'excitation ; dans lequel le faisceau lumineux d'excitation est focalisé sur un échantillon mesuré (5) via une pupille d'éclairage (3) qui se trouve sur un plan de pupille d'un objectif (2), et obtient un faisceau lumineux excité d'échantillonnage; le faisceau de lumière excitée comprend la lumière de diffusion Raman, la lumière de diffusion Brillouin, la lumière de diffusion Rayleigh et la lumière réfléchie ;

le faisceau lumineux excité d'échantillonnage passe une pupille collectrice (4) sur le plan de la pupille de l'objectif (2) et atteint un système optique dichroïque (6) ;

étape 1302, le système optique dichroïque (6) séparant la lumière de diffusion Raman du faisceau lumineux excité d'échantillonnage entrant ;

dans lequel la lumière de diffusion Raman est transmise à travers le système optique dichroïque (6) et entre dans un système de détection de spectre Raman (7) ;

la lumière de diffusion Brillouin, la lumière de diffusion Rayleigh et la lumière réfléchie qui sont réfléchies par le système optique dichroïque (6) et entrent dans un système de division de faisceau (11) ;

étape 1303, le système de détection de spectre Raman (7) effectuant une détection de spectre de la lumière de diffusion Raman entrante pour obtenir le signal de spectre Raman ;

étape 1304, le système de division de faisceau (11) effectuant la division de faisceau de la lumière de diffusion Brillouin, de la lumière de diffusion Rayleigh et de la lumière réfléchie entrantes;

dans lequel la lumière de diffusion Brillouin, la lumière de diffusion Rayleigh et la lumière réfléchie qui sont réfléchies par le système de division de faisceau (11) et entrent dans un système de détection de spectre Brillouin (12) ;

la lumière de diffusion Brillouin, la lumière de diffusion Rayleigh et la lumière transmises à travers du système de division de faisceau (11) et entrent dans un système de détection confocale différentielle laser à ouverture divisée (16) ;

étape 1305, le système de détection de spectre Brillouin (12) effectuant la détection de spectre la lumière de diffusion Brillouin, de la lumière de diffusion Rayleigh et de la lumière réfléchie entrantes pour obtenir le signal de spectre Brillouin ;

étape 1306, le système de détection confocale différentielle laser à ouverture divisée (16) détectant un disque d'Airy de la lumière de diffusion Brillouin, de la lumière de diffusion Rayleigh et de la lumière réfléchie entrantes ;

étape 1307 effectuant un processus de division du disque d'Airy de la lumière de diffusion Brillouin, de la lumière de diffusion Rayleigh et de la lumière réfléchie, obtenant une première zone de détection (19) et une deuxième zone de détection (20), et obtenant des signaux d'intensité lumineuse correspondants ; effectuant un traitement de soustraction différentielle au signal d'intensité lumineuse dans la première zone de détection (19) et au signal d'intensité lumineuse dans la deuxième zone de détection (20), pour obtenir une courbe de réponse axiale confocale différentielle laser à ouverture divisée (31), la courbe de réponse axiale confocale différentielle laser à ouverture divisée comprend un point de passage par zéro, le point de passage par zéro correspond exactement au foyer de l'objectif (2) ; utilisant le point de passage par zéro pour calculer les informations de position de l'échantillon mesuré (5) ;

étape 1308, un système de traitement informatique (30) commandant un système de balayage tridimensionnel (24) pour déplacer l'échantillon mesuré (5) au point détecté suivant, répète l'étape 1303 à l'étape 1308 jusqu'à ce que la mesure soit terminée ;

étape 1309, effectuant un traitement de reconstruction 3D et un traitement de fusion d'informations spectrales sur l'échantillon mesuré (5) utilisant les informations de position de chaque point détecté et le signal de spectre Raman et Brillouin correspondant et le système de division de faisceau (11).

2. Méthode selon la revendication 1, dans laquelle l'étape 1307 comprend en outre :

le système de balayage tridimensionnel (24) entraînant l'échantillon mesuré (5) et balayant l'échantillon mesuré (5) le long d'une direction d'axe principal de l'objectif (2), en même temps surveillant du point de passage par zéro, faisant le réglage fin de la position de l'échantillon mesuré (5) via le système de balayage tridimensionnel (24) pour compenser l'erreur de défocalisation causée par la déviation de l'environnement, et pour rendre le point détecté de l'échantillon mesuré (5) entièrement situé dans le foyer de l'objectif (2) ;

le capteur de position (25) renvoyant les informations de position latérale et axiale au système de traitement informatique (30).

3. Méthode selon la revendication 1, dans laquelle un système de modulation de faisceau lumineux (36) est disposé entre le système de source lumineuse (1) et la pupille d'éclairage (3) ;

le système de modulation de faisceau lumineux (36) comprend une quatrième lentille convergente (37), un troisième trou d'épingle (38) qui est au foyer de la quatrième lentille convergente (37), et une cinquième lentille convergente (39) dont le foyer est au troisième trou d'épingle (38) ; la quatrième lentille convergente (37), le troisième trou d'épingle (38) et la cinquième lentille convergente (39) sont disposés en séquence le long du trajet de lumière d'excitation ; le faisceau lumineux d'excitation entre dans le troisième trou d'épingle (38) après avoir été convergé par la quatrième lentille convergente (37) et forme une source de lumière ponctuelle, puis il est collimaté et élargi pour devenir un faisceau lumineux d'excitation parallèle par la cinquième lentille convergente (39) dont le foyer se trouve au niveau du troisième trou d'épingle (38).

4. Méthode selon la revendication 1, dans laquelle une lentille de collimation (40) et un premier terminal de fibre optique (41) au foyer de la lentille de collimation (40) sont disposés entre le système de source lumineuse (1) et la pupille d'éclairage (3), et le premier terminal de fibre optique (41) accède à un premier cordon de raccordement de fibre optique (42) ;

le faisceau laser est transmis au premier terminal de fibre optique (41) via le premier cordon de raccordement de fibre optique (42) ;

le premier terminal de fibre optique (41) émet un faisceau laser ;

le faisceau laser est transmis parallèlement à la pupille d'éclairage (3) sur le plan de la pupille de la lentille d'objectif (2) mesurée, après avoir été collimaté par la lentille de collimation (40).

5. Méthode selon la revendication 1, dans laquelle le système de détection de spectre Raman (7) comprend un premier condenseur (8), un premier détecteur de spectre (9) et un premier détecteur (10) ;

étape 1303 comprend :

le premier condenseur (8) focalisant la lumière de diffusion Raman séparée par le système optique dichroïque (6) ;

le premier détecteur de spectre (9) extrayant le signal du spectre Raman de la lumière de diffusion Raman focalisée ;

le premier détecteur (10) détectant une intensité relative de spectre avec une longueur d'onde différente de la lumière de diffusion Raman pour obtenir l'information de spectre Raman.

6. Méthode selon la revendication 5, dans laquelle un plan de détection du premier détecteur de spectre (9) est situé au foyer de la première lentille convergente (8), le système de détection de spectre Raman (7) comprend en outre un premier trou d'épingle (34) ;

le premier trou d'épingle (34) est disposé au foyer de la première lentille convergente (8), le plan de détection du premier détecteur de spectre (9) est situé derrière le premier trou d'épingle (34) ;

étape 1303 comprend en outre :

le premier trou d'épingle (34) filtrant la lumière parasite à la position sauf le foyer de la première lentille convergente (8).

7. Méthode selon la revendication 5, dans laquelle le système de détection de spectre Raman (7) comprend un deuxième terminal de fibre optique (43) et une deuxième fibre optique (44) ;

le deuxième terminal de fibre optique (43) accède à la deuxième fibre optique (44) ;

étape 1303 comprend en outre :

le deuxième terminal de fibre optique (43) transmettant la lumière de diffusion Raman dans le premier détecteur de spectre (9) par l'intermédiaire de la deuxième fibre optique (44).

8. Méthode selon la revendication 1, dans laquelle le système de détection de spectre Brillouin (12) comprend une deuxième lentille convergente (13), un deuxième détecteur de spectre (14) et un deuxième détecteur (15) ;

étape 1305 comprend :

la lumière de diffusion Brillouin, la lumière de diffusion Rayleigh et la lumière réfléchie entrantes sont transmises au deuxième détecteur de spectre (14) après avoir été convergées par la deuxième lentille convergente (13) ;

le deuxième détecteur de spectre (14) extrayant la lumière de diffusion Brillouin (11) de la lumière de diffusion Brillouin, de la lumière de diffusion Rayleigh et de la lumière réfléchie entrantes;

le deuxième détecteur (15) détectant une intensité relative de spectre avec une longueur d'onde différente de la lumière de diffusion Brillouin extraite par le deuxième détecteur de spectre (14) pour obtenir le signal de spectre Brillouin.

9. Méthode selon la revendication 8, dans laquelle le plan de détection du deuxième détecteur de spectre (14) est situé au foyer de la deuxième lentille convergente (13), le système de détection de spectre Brillouin (12) comprend en outre un deuxième trou d'épingle ;

le deuxième trou d'épingle (35) est disposé au foyer de la deuxième lentille convergente (13), le plan de détection du deuxième détecteur de spectre (14) est situé derrière le deuxième trou d'épingle (35) ;

étape 1305 comprend en outre :

le deuxième trou d'épingle (35) filtrant la lumière parasite à la position sauf le foyer de la deuxième lentille convergente (13).

10. Méthode selon la revendication 8, dans laquelle le système de détection de spectre Brillouin (12) comprend un troisième terminal de fibre optique (45) et une troisième fibre optique (46) ;

le troisième terminal de fibre optique (45) est situé au foyer de la deuxième lentille convergente (13), le troisième terminal de fibre optique (45) accède à la troisième fibre optique (46) ;

étape 1305 comprend en outre :

le troisième terminal de fibre optique (45) transmettant la lumière de diffusion Brillouin, la lumière de diffusion Rayleigh et la lumière réfléchie au deuxième détecteur de spectre (14) via la troisième fibre optique (46).

11. Méthode selon la revendication 1, dans laquelle le système de détection confocale différentielle à laser à ouverture divisée (16) comprend une troisième lentille convergente (17) et un système d'acquisition d'image (18) ;

étape 1306 comprend :

la lumière de diffusion Brillouin, la lumière de diffusion Rayleigh et la lumière réfléchie entrantes sont transmises au système d'acquisition d'image (18) après avoir été convergées par la troisième lentille convergente (17) ;

le système d'acquisition d'images (18) détectant le disque d'Airy de la lumière de diffusion Brillouin, de la lumière de diffusion Rayleigh et de la lumière réfléchie convergentes.

12. Méthode selon la revendication 11, dans laquelle le plan de détection du système d'acquisition d'image (18) est situé au foyer de la troisième lentille convergente (17) ;

la lumière de diffusion Brillouin, la lumière de diffusion Rayleigh et la lumière réfléchie entrantes sont convergées vers le plan de détection du système d'acquisition d'image (18) par l'intermédiaire de la troisième lentille convergente (17).

13. Méthode selon la revendication 11, dans laquelle le système de détection confocale différentielle à laser à ouverture divisée (16) comprend en outre un système d'amplification d'image (47) ;

le plan objet du système d'amplification d'image (47) est au foyer de la troisième lentille convergente (17), le plan de détection du système d'acquisition d'image (18) est au plan image du système d'amplification d'image (47).

14. Méthode selon la revendication 1, dans laquelle le faisceau lumineux d'excitation comprend un faisceau polarisé circulaire, un faisceau polarisé linéaire ou un faisceau structuré produit par un filtre de pupille.

15. Dispositif de mesure du spectre Brillouin-Raman confocale différentielle à laser à ouverture divisée comprenant :

un système de source lumineuse (1) configuré pour générer un faisceau lumineux d'excitation ; dans lequel le faisceau lumineux d'excitation est focalisé sur un échantillon mesuré (5) par un objectif (2) après être passé par une pupille d'éclairage (3) qui se trouve sur un plan de pupille d'objectif (2), et obtient un faisceau lumineux excité d'échantillonnage; le faisceau lumineux excité d'échantillonnage comprend la lumière de diffusion Raman, la lumière de diffusion Brillouin, la lumière de diffusion Rayleigh et la lumière réfléchie excitées ;

le faisceau lumineux excité d'échantillonnage passe par une pupille collectrice (4) qui est sur le plan de la pupille de l'objectif (2) et atteint un système optique dichroïque (6) ;

le système optique dichroïque (6) configuré pour séparation de la lumière de diffusion Raman du faisceau lumineux excité d'échantillonnage entrant ;

la lumière de diffusion Raman est transmise à travers le système optique dichroïque (6) et entre dans un système de détection de spectre Raman (7) ;

la lumière de diffusion Brillouin, la lumière de diffusion Rayleigh et la lumière réfléchie sont réfléchies par le système optique dichroïque (6) et entrent dans un système de division de faisceau (11) ;

le système de détection de spectre Raman (7) configuré pour effectuer une détection de spectre de la lumière de diffusion Raman entrante pour obtenir le signal de spectre Raman ;

le système de division de faisceau (11) configuré pour effectuer la division de la lumière de diffusion Brillouin, de la lumière de diffusion Rayleigh et de la lumière réfléchie entrantes;

la lumière de diffusion Brillouin, la lumière de diffusion Rayleigh et la lumière réfléchie sont réfléchies par le système de division de faisceau (11) et entrent dans un système de détection de spectre Brillouin (12) ;

la lumière de diffusion Brillouin, la lumière de diffusion Rayleigh et la lumière transmises à travers du système de division de faisceau (11) et entrent dans un système de détection confocale différentielle à laser à ouverture divisée (16) ;

le système de détection de spectre Brillouin (12) configuré pour effectuer la détection de spectre la lumière de diffusion Brillouin, de la lumière de diffusion Rayleigh et de la lumière réfléchie entrantes pour obtenir le signal de spectre Brillouin ;

le système de détection confocale différentielle à laser à ouverture divisée (16) configuré pour détecter un disque d'Airy de la lumière de diffusion Brillouin, de la lumière de diffusion Rayleigh et de la lumière réfléchie entrantes ;

une unité de traitement de données (26) comprenant un module de division et de détection de points (27) et un module de soustraction différentielle (28) configurés pour traiter le disque d'Airy détecté et obtenir une réponse axiale confocale différentielle à laser à ouverture divisée (31) et configuré pour calculer une information de position tridimensionnelle de l'échantillon mesuré (5) en utilisant le disque d'Airy détecté par le système de détection confocale différentielle à laser à ouverture divisée (16) et le déplacement de l'échantillon obtenu par un capteur de position (25) ;

un système de traitement informatique (30) configuré pour commander un système de balayage tridimensionnel (24) pour déplacer l'échantillon mesuré (5) au point mesuré suivant, répète l'étape 1303 à l'étape 1308 jusqu'à ce que la mesure soit terminée ;

un module de fusion de données (29) configuré pour effectuer une reconstruction 3D et une fusion d'informations de spectre de l'échantillon mesuré (5) utilisant des informations de position de chaque point mesuré et le signal de spectre Raman et le signal de spectre Brillouin correspondants.

FIG. 1

FIG. 2

FIG. 3

FIG. 4

FIG. 5

FIG. 6

FIG. 7

FIG. 8

FIG. 9

FIG. 10

FIG. 11

FIG. 12

| a light source system (1) generates a laser beam | 1301 |

| the dichroic optical system (6) separating the Raman scattering light from the entered sample light beam | 1302 |

| the Raman spectrum detecting system (7) performing spectrum detection to the entered Raman scattering light to obtain the Raman spectrum signal | 1303 |

| the beam splitting system (11) performing light splitting to the entered Brillouin scattering light, Rayleigh scattering light and reflected light | 1304 |

| the Brillouin spectrum detecting system (12) performing spectrum detection to the entered Brillouin scattering light, Rayleigh scattering light and reflected light to obtain the beam splitting system (11) | 1305 |

| the divided-aperture laser differential confocal detecting system (16) detecting an Airy disk of the entered Rayleigh scattering light, Brillouin scattering light and reflected light | 1306 |

| using the detected Airy disk detected by the divided-aperture laser differential confocal detecting system (16) and a sample displacement information obtained by a position sensor (25) to calculate position information of the measured sample (5) | 1307 |

| a computer processing system (30) controlling a three-dimensional scannning system (24) to move the measured sample (5) to the next position, repeating step 1303 to step 1308 until the measurement is finished | 1308 |

| performing 3D reconstruction processing and spectrum information fusion processing to the measured sample (5) using position information of each position and the corresponding Raman spectrum signal and beam splitting system (11) | 1309 |

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103439254 A

- CN 102053047 A